(19) Europäisches Patentamt
European Patent Office
Office européen des brevets

(11) **EP 4 576 598 A1**

(12) **EUROPEAN PATENT APPLICATION**
published in accordance with Art. 153(4) EPC

(43) Date of publication:
**25.06.2025 Bulletin 2025/26**

(21) Application number: **22961693.3**

(22) Date of filing: **11.10.2022**

(51) International Patent Classification (IPC):
*H04B 7/04* $^{(2017.01)}$

(52) Cooperative Patent Classification (CPC):
**H04B 7/04**

(86) International application number:
**PCT/CN2022/124728**

(87) International publication number:
**WO 2024/077500 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **DING, Wenqi**
**Shenzhen, Guangdong 518129 (CN)**
• **PENG, Jie**
**Shenzhen, Guangdong 518129 (CN)**

• **ZHOU, Qian**
**Shenzhen, Guangdong 518129 (CN)**
• **LUO, Gang**
**Shenzhen, Guangdong 518129 (CN)**
• **MA, Jun**
**Shenzhen, Guangdong 518129 (CN)**
• **DING, Bin**
**Shenzhen, Guangdong 518129 (CN)**
• **JIANG, Zhize**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION DEVICE AND BASE STATION**

(57) This application provides a communication device and a base station, to adapt to a channel and a bandwidth of the communication device without losing an antenna array surface aperture. The communication device includes $2^n$ radio frequency channels, and includes a digital unit, a topology network unit, and a beamforming unit, the topology network unit is connected between the digital unit and the beamforming unit, and the topology network unit includes a first power divider and a second power divider. The first power divider and the second power divider each include $2^n$ splitting ports and one combining port, the splitting ports of the first power divider are respectively connected to the $2^n$ radio frequency channels on a digital unit side, the combining port of the first power divider is connected to the combining port of the second power divider, and the splitting ports of the second power divider are connected to the $2^n$ radio frequency channels on a beamforming unit side. n is a natural number and $n \geq 1$.

FIG. 8

**Description**

TECHNICAL FIELD

This application relates to the field of communication technologies, and in particular, to a communication device and a base station.

BACKGROUND

With rapid development of 5G technologies, a millimeter-wave frequency band is highly valued due to ultra-wide spectrum resources thereof, and is considered as a key frequency band for resolving high-capacity holographic communication in the future. To make full use of the spectrum resources of the millimeter-wave frequency band, under a condition of an existing digital process capability, some devices achieve bandwidth enhancement by increasing a quantity of channels. However, this manner causes a loss of an antenna array surface aperture, and further causes a reduction of effective isotropic radiated power (effective isotropic radiated power, EIRP) of an antenna. However, coverage of a millimeter-wave system is limited due to a high frequency band and a large path loss. The foregoing problem further aggravates coverage shrinkage of the millimeter-wave system. Therefore, how to balance a system bandwidth, the quantity of channels, the effective isotropic radiated power, and another performance indicator is an urgent technical problem to be resolved currently.

SUMMARY

This application provides a communication device and a base station, to adapt to a quantity of channels and a bandwidth of the communication device without losing an antenna array surface aperture.

According to a first aspect, this application provides a communication device. The communication device may include $2^n$ radio frequency channels, where n is a natural number and $n \geq 1$. In addition, the communication device may include a digital unit, a topology network unit, and a beamforming unit. The topology network unit is connected between the digital unit and the beamforming unit, and the topology network unit includes a first power divider and a second power divider. The communication device may further include $2^n$ radio frequency channels, where n is a natural number and $n \geq 1$. The first power divider and the second power divider may each include $2^n$ splitting ports and one combining port. The splitting ports of the first power divider may be respectively connected to the $2^n$ radio frequency channels on a digital unit side, the splitting ports of the second power divider may be respectively connected to the $2^n$ radio frequency channels on a beamforming unit side, and the combining port of the first power divider is connected to the combining port of the second power divider.

In the foregoing solution, all signals in the $2^n$ radio frequency channels on the digital unit side may be connected to two array surfaces of an antenna by the beamforming unit after passing through the topology network unit, which is equivalent to that each radio frequency channel of the topology network unit is connected to the two array surfaces of the antenna. Therefore, each radio frequency channel can obtain apertures of the two array surfaces of the antenna. In addition, a bandwidth of each signal output by the topology network unit is a bandwidth obtained after $2^n$ signals input to the topology network unit are combined, so that radio frequency bandwidth combination is implemented. Therefore, the radio frequency channels corresponding to the topology network unit are equivalent to one radio frequency channel, and feasibility is provided for bandwidth enhancement of the communication device.

In some possible implementation solutions, in a signal transmitting direction, signals in the $2^n$ radio frequency channels on the digital unit side may be in a same frequency band, and center frequencies of the signals in the $2^n$ radio frequency channels are different. In this case, the bandwidth of the communication device can be effectively widened through a radio frequency bandwidth combination function of the topology network unit.

In some other possible implementation solutions, in a signal transmitting direction, signals in the $2^n$ radio frequency channels on the digital unit side may alternatively be in different frequency bands. In this case, through the radio frequency bandwidth combination function of the topology network unit, $2^n$ signals output by the $2^n$ splitting ports of the second power divider each have two frequency bands. Therefore, the bandwidth of the communication device is also widened.

Similarly, in some possible implementation solutions, in a signal receiving direction, signals in the $2^n$ radio frequency channels on the beamforming unit side may be in a same frequency band, and center frequencies of the signals in the $2^n$ radio frequency channels are different. In this case, the bandwidth of the communication device can be effectively widened through the radio frequency bandwidth combination function of the topology network unit.

In some other possible implementation solutions, in a signal receiving direction, signals in the $2^n$ radio frequency channels on the beamforming unit side may alternatively be in different frequency bands. In this case, through the radio frequency bandwidth combination function of the topology network unit, $2^n$ signals output by the $2^n$ splitting ports of the first power divider each have two frequency bands. Therefore, the bandwidth of the communication device is also widened.

In some possible implementation solutions, the communication device may further include an antenna, and the antenna may include at least two array surfaces. When n = 1, the communication device includes two radio frequency channels, and the two radio frequency channels on the beamforming unit side may be respectively connected to two array surfaces of the antenna. In other words, the two radio frequency channels on the beamforming unit side are respectively connected to two array surfaces of the antenna. In this case, each radio frequency channel can obtain apertures of the two array surfaces of the antenna.

In some other possible implementation solutions, when $n \geq 2$, the $2^n$ radio frequency channels on the beamforming unit side may be separately connected to $2^{n-1}$ array surfaces of the antenna. In this case, each radio frequency channel can obtain apertures of the two array surfaces of the antenna.

In some possible implementation solutions, the antenna may be a single-band antenna, or may be a multi-band antenna.

In some possible implementation solutions, the communication device may further include a frequency conversion unit. The frequency conversion unit may be connected between the digital unit and the topology network unit, or may be connected between the topology network unit and the beamforming unit. The frequency conversion unit may be configured to implement conversion between a low-frequency signal and a high-frequency signal in each radio frequency channel.

In some possible implementation solutions, the topology network unit may further include an amplifier. The amplifier may be disposed at the splitting port or the combining port of the first power divider, or may be disposed at the splitting port or the combining port of the second power divider, to amplify power of a signal in the radio frequency channel.

In some possible implementation solutions, the topology network unit may further include a filter. The filter may be disposed at the splitting port or the combining port of the first power divider, or may be disposed at the splitting port or the combining port of the second power divider, to filter the signal in the radio frequency channel, and therefore suppress electromagnetic energy in a non-operating frequency band.

In some possible implementation solutions, the topology network unit may further include a coupler. The coupler may be disposed at the splitting port or the combining port of the first power divider, or may be disposed at the splitting port or the combining port of the second power divider, to feed back the signal in the radio frequency channel, and therefore facilitate subsequent correction of the signal.

In some possible implementation solutions, the communication device may further include a circuit board, and the topology network unit may be disposed on the circuit board. For example, the digital unit, the beamforming unit, and the like may be disposed on the circuit board together, to improve integration of the communication device.

In some possible implementation solutions, the communication device may further include a radio frequency chip, and the topology network unit may be integrated into the radio frequency chip, to reduce implementation costs of the topology network unit.

In some possible implementation solutions, the communication device may further include a control unit, a clock unit, and a power supply unit. The control unit may be connected to the digital unit, the topology network unit, and the beamforming unit separately, to control operation of each unit and communication with an external interface. The clock unit may be connected to the digital unit, the topology network unit, and the beamforming unit separately. The clock unit may be configured to: generate a clock signal and provide the clock signal to each unit, to control related units to operate synchronously. The power supply unit may be connected to the digital unit, the topology network unit, and the beamforming unit separately, to convert a voltage of an external power supply into a voltage that adapts to each unit, and then supply power to each unit.

According to a second aspect, this application further provides a communication device. The communication device may include $2^n$ radio frequency channels, where n is a natural number and $n \geq 1$. In addition, the communication device may include a digital unit, a topology network unit, and a beamforming unit. The topology network unit is connected between the digital unit and the beamforming unit, and the topology network unit includes a first power divider, a second power divider, $2^n$ transmission lines, and $2^{n+1}$ switches. The first power divider and the second power divider each may include $2^n$ splitting ports and one combining port, and the combining port of the first power divider is connected to the combining port of the second power divider. In the $2^{n+1}$ switches, $2^n$ switches may be disposed on a digital unit side and respectively correspond to the $2^n$ radio frequency channels, and the other $2^n$ switches in the $2^{n+1}$ switches are disposed on a beamforming unit side and respectively correspond to the $2^n$ radio frequency channels. On the digital unit side, each of the switches may be configured to switchably connect a corresponding radio frequency channel between one splitting port of the first power divider and one end of one of the transmission lines. On the beamforming unit side, each of the switches may be configured to switchably connect the corresponding radio frequency channel between one splitting port of the second power divider and the other end of the one of the transmission lines.

In the foregoing solution, when the radio frequency channel on the digital unit side and the radio frequency channel on the beamforming unit side are respectively connected to the first power divider and the second power divider, a large antenna array surface aperture may be obtained, and radio frequency bandwidth combination may be implemented. When the radio frequency channel on the digital unit side and the radio frequency channel on the beamforming unit side are respectively connected to the transmission lines, an antenna is enabled to implement a degree of freedom of a plurality of beams, and therefore implement a multi-user scheduling function. Therefore, a connection status of each switch is adjusted, so that the topology network unit can flexibly switch between the foregoing two operating modes, thereby adapting to a channel and a bandwidth of the communication device without losing an antenna array surface aperture.

In some possible implementation solutions, in a signal transmitting direction, signals in the $2^n$ radio frequency channels on the digital unit side may be in a same frequency band, and center frequencies of the signals in the $2^n$ radio frequency channels are different. In this case, the bandwidth of the communication device can be effectively widened through a radio frequency bandwidth combination function of the topology network unit.

In some other possible implementation solutions, in a signal transmitting direction, signals in the $2^n$ radio frequency channels on the digital unit side may alternatively be in different frequency bands. In this case, through a radio frequency bandwidth combination function of the topology network unit, $2^n$ signals output by the $2^n$ splitting ports of the second power divider each have two frequency bands. Therefore, the bandwidth of the communication device is also widened.

In some possible implementation solutions, in a signal receiving direction, signals in the $2^n$ radio frequency channels on the beamforming unit side may be in a same frequency band, and center frequencies of the signals in the $2^n$ radio frequency channels are different. In this case, the bandwidth of the communication device can be effectively widened through the radio frequency bandwidth combination function of the topology network unit.

In some other possible implementation solutions, in a signal receiving direction, signals in the $2^n$ radio frequency channels on the beamforming unit side may alternatively be in different frequency bands. In this case, through the radio frequency bandwidth combination function of the topology network unit, $2^n$ signals output by the $2^n$ splitting ports of the first power divider each have two frequency bands. Therefore, the bandwidth of the communication device is also widened.

In some possible implementation solutions, the communication device may further include an antenna, and the antenna may include at least two array surfaces. When n = 1, the communication device includes two radio frequency channels, and the two radio frequency channels on the beamforming unit side may be respectively connected to two array surfaces of the antenna. In other words, the two radio frequency channels on the beamforming unit side are respectively connected to the two array surfaces of the antenna. In this case, each radio frequency channel can obtain apertures of the two array surfaces of the antenna.

In some other possible implementation solutions, when n ≥ 2, the $2^n$ radio frequency channels on the beamforming unit side may be separately connected to $2^{n-1}$ array surfaces of the antenna. In this case, each radio frequency channel can obtain apertures of two array surfaces of the antenna.

In some possible implementation solutions, the antenna may be a single-band antenna, or may be a multi-band antenna.

In some possible implementation solutions, the communication device may further include a frequency conversion unit. The frequency conversion unit may be connected between the digital unit and the topology network unit, or may be connected between the topology network unit and the beamforming unit. The frequency conversion unit may be configured to implement conversion between a low-frequency signal and a high-frequency signal in each radio frequency channel.

In some possible implementation solutions, the topology network unit may further include an amplifier. The amplifier may be disposed at the splitting port or the combining port of the first power divider, or may be disposed at the splitting port or the combining port of the second power divider, to amplify power of a signal in the radio frequency channel.

In some possible implementation solutions, the topology network unit may further include a filter. The filter may be disposed at the splitting port or the combining port of the first power divider, or may be disposed at the splitting port or the combining port of the second power divider, to filter the signal in the radio frequency channel, and therefore suppress electromagnetic energy in a non-operating frequency band.

In some possible implementation solutions, the topology network unit may further include a coupler. The coupler may be disposed at the splitting port or the combining port of the first power divider, or may be disposed at the splitting port or the combining port of the second power divider, to feed back the signal in the radio frequency channel, and therefore facilitate subsequent correction of the signal.

In some possible implementation solutions, the communication device may further include a circuit board, and the topology network unit may be disposed on the circuit board. For example, the digital unit, the beamforming unit, and the like may be disposed on the circuit board together, to improve integration of the communication device.

In some possible implementation solutions, the communication device may further include a radio frequency chip, and the topology network unit may be integrated into the radio frequency chip, to reduce implementation costs of the topology network unit.

In some possible implementation solutions, the communication device may further include a control unit, a clock unit, and a power supply unit. The control unit may be connected to the digital unit, the topology network unit, and the beamforming unit separately, to control operation of each unit and communication with an external interface. The clock unit may be connected to the digital unit, the topology network unit, and the beamforming unit separately. The clock unit may be configured to: generate a clock signal and provide the clock signal to each unit, to control related units to operate synchronously. The power supply unit may be connected to the digital unit, the topology network unit, and the beamforming unit separately, to convert a voltage of an external power supply into a voltage that adapts to each unit, and then supply power to each unit.

According to a third aspect, this application further provides a communication device. The communication device may include two radio frequency channels. The communication device may include a digital unit, a topology network unit, and a beamforming unit. The topology network unit is connected between the digital unit and the beamforming unit, and the topology network unit includes a first power divider, a second power divider, a third power divider, a fourth power divider, and a phase shifter. A combining port of the first power divider and a combining port of the third power divider are respectively connected to the two radio frequency channels on a digital unit side, and a combining port of the second power divider and a combining port of the fourth power divider are respectively connected to the two radio frequency channels on a beamforming unit side. A first splitting port of the first power divider is connected to a first splitting port of the second power divider, a second splitting port of the first power divider is connected to a first splitting port of the fourth power divider, a first splitting port of the third power divider is connected to a second splitting port of the second power divider, and a second splitting port of the third power divider is connected to a second splitting port of the fourth power divider. The phase shifter is connected between the first splitting port of the third power divider and the second splitting port of the second power divider, and a phase of the phase shifter may be switched between 0° or 180°.

In the foregoing solution, when the phase of the phase shifter is 0°, each radio frequency channel corresponding to the topology network unit may obtain apertures of two array surfaces of an antenna, and can implement radio frequency bandwidth combination. When the phase of the phase shifter is 180°, signals in the two radio frequency channels corresponding to the topology network unit are interleaved and affect each other, and each radio frequency channel may obtain the apertures of the two array surfaces of the antenna. Therefore, the phase of the phase shifter is adjusted, so that the topology network unit can flexibly switch between the foregoing two operating modes, thereby adapting to a channel and a bandwidth of the communication device without losing an antenna array surface aperture.

In some possible implementation solutions, in a signal transmitting direction, signals in the two radio frequency channels on the digital unit side may be in a same frequency band, and center frequencies of the signals in the two radio frequency channels are different. In this case, the bandwidth of the communication device can be effectively widened through a radio frequency bandwidth combination function of the topology network unit.

In some other possible implementation solutions, in a signal transmitting direction, signals in the two radio frequency channels on the digital unit side may alternatively be in different frequency bands. In this case, through the radio frequency bandwidth combination function of the topology network unit, two signals output by the two splitting ports of the second power divider each have two frequency bands. Therefore, the bandwidth of the communication device is also widened.

In some possible implementation solutions, in a signal receiving direction, signals in the two radio frequency channels on the beamforming unit side may be in a same frequency band, and center frequencies of the signals in the two radio frequency channels are different. In this case, the bandwidth of the communication device can be effectively widened through a radio frequency bandwidth combination function of the topology network unit.

In some other possible implementation solutions, in a signal receiving direction, signals in the two radio frequency channels on the beamforming unit side may alternatively be in different frequency bands. In this case, through the radio frequency bandwidth combination function of the topology network unit, two signals output by the two splitting ports of the first power divider each have two frequency bands. Therefore, the bandwidth of the communication device is also widened.

In some possible implementation solutions, the communication device may further include an antenna, and the antenna may include at least two array surfaces. The two radio frequency channels on the beamforming unit side may be respectively connected to the two array surfaces of the antenna. In this case, each radio frequency channel may obtain the apertures of the two array surfaces of the antenna.

In some possible implementation solutions, the antenna may be a single-band antenna, or may be a multi-band antenna.

In some possible implementation solutions, the communication device may further include a frequency conversion unit. The frequency conversion unit may be connected between the digital unit and the topology network unit, or may be connected between the topology network unit and the beamforming unit. The frequency conversion unit may be configured to implement conversion between a low-frequency signal and a high-frequency signal in each radio frequency channel.

In some possible implementation solutions, the topology network unit may further include an amplifier. The amplifier may be disposed at the splitting port or the combining port of the first power divider, may be disposed at the splitting port or the combining port of the second power divider, may be disposed at the splitting port or the combining port of the third power divider, or may be disposed at the splitting port or the combining port of the fourth power divider, to amplify power of a signal in the radio frequency channel.

In some possible implementation solutions, the topology network unit may further include a filter. The filter may be disposed at the splitting port or the combining port of the first power divider, may be disposed at the splitting port or the combining port of the second power divider, may be disposed at the splitting port or the combining port of the third power divider, or may be disposed at the splitting port or the combining port of the fourth power divider, to filter the signal in the radio frequency channel, and therefore suppress electromagnetic energy in a non-operating frequency band.

In some possible implementation solutions, the topology network unit may further include a coupler. The coupler may be disposed at the splitting port or the combining port of the first power divider, may be disposed at the splitting port or the combining port of the second power divider, may be disposed at the splitting port or the combining port of the third power divider, or may be disposed at the splitting port or the combining port of the fourth power divider, to feed back the signal in the radio frequency channel, and therefore facilitate subsequent correction of the signal.

In some possible implementation solutions, the communication device may further include a circuit board, and the topology network unit may be disposed on the circuit board. For example, the digital unit, the beamforming unit, and the like may be disposed on the circuit board together, to improve integration of the communication device.

In some possible implementation solutions, the communication device may further include a radio frequency chip, and the topology network unit may be integrated into the radio frequency chip, to reduce implementation costs of the topology network unit.

In some possible implementation solutions, the communication device may further include a control unit, a clock unit, and a power supply unit. The control unit may be connected to the digital unit, the topology network unit, and the beamforming unit separately, to control operation of each unit and communication with an external interface. The clock unit may be connected to the digital unit, the topology network unit, and the beamforming unit separately. The clock unit may be configured to: generate a clock signal and provide the clock signal to each unit, to control related units to operate synchronously. The power supply unit may be connected to the digital unit, the topology network unit, and the beamforming unit separately, to convert a voltage of an external power supply into a voltage that adapts to each unit, and then supply power to each unit.

According to a fourth aspect, this application further provides a base station. The base station may include a baseband processing unit and the communication device according to any one of the possible implementation solutions of the first aspect to the third aspect, and the communication device is connected to the baseband processing unit. The communication device can implement good communication performance.

## BRIEF DESCRIPTION OF DRAWINGS

FIG. 1 is a diagram of an architecture of a system according to an embodiment of this application;
FIG. 2 is a diagram of a structure of a base station according to an embodiment of this application;
FIG. 3 is a diagram of a structure of an antenna according to an embodiment of this application;
FIG. 4 is a diagram of a structure of another antenna according to an embodiment of this application;
FIG. 5 is a diagram of an architecture of a communication device according to an embodiment of this application;
FIG. 6 is a diagram of an architecture of another communication device according to an embodiment of this application;
FIG. 7 is a diagram of an architecture of another communication device according to an embodiment of this application;
FIG. 8 is a diagram of a structure of a topology network unit according to an embodiment of this application;
FIG. 9 is a diagram of a spectrum of two radio frequency channels corresponding to the topology network unit shown in FIG. 8;
FIG. 10 is a diagram of another spectrum of two radio frequency channels corresponding to the topology network unit shown in FIG. 8;
FIG. 11 is a diagram of another spectrum of two radio frequency channels corresponding to the topology network unit shown in FIG. 8;
FIG. 12 is a diagram of a structure of another topology network according to an embodiment of this application;
FIG. 13 shows another topology network unit according to an embodiment of this application;
FIG. 14 is a diagram of a structure of another topology network unit according to an embodiment of this application;
FIG. 15 is a diagram of a state of the topology network unit shown in FIG. 14 in a first operating mode;
FIG. 16 is a diagram of a state of the topology network unit shown in FIG. 14 in a second operating mode;
FIG. 17 is a diagram of a structure of another topology network unit according to an embodiment of this application;
FIG. 18 is a diagram of a state of the topology network unit shown in FIG. 17 in a first operating mode;
FIG. 19 is a diagram of a state of the topology network unit shown in FIG. 17 in a second operating mode;
FIG. 20 is a diagram of a structure of another topology network unit according to an embodiment of this application;
FIG. 21 is a diagram of a signal flow direction of the topology network unit shown in FIG. 20 in a transmitting direction; and

FIG. 22 is a diagram of a signal flow direction of the topology network unit shown in FIG. 20 in a receiving direction.

Reference numerals:

> 1: antenna; 11: radome; 11a and 11b: array surfaces; 111: reflector; 112: antenna element;
>
> 2: pole; 3: antenna adjustment bracket; 4: remote radio unit; 5: baseband processing unit; 6: cable;
>
> 8: communication device; 81: digital unit; 82, 82a, and 82b: topology network units; 821: first power divider;
>
> 8211: first splitting port; 8212: second splitting port; 822: second power divider; 8221: fifth splitting port; 8222: sixth splitting port; 8213: third splitting port; 8214: fourth splitting port; 8223: seventh splitting port;
>
> 8224: eighth splitting port; 8211a: first splitting port of a first power divider;
>
> 8212a: second splitting port of a first power divider; 8221a: first splitting port of a second power divider; 8222a: second splitting port of a second power divider; 8271a: first splitting port of a third power divider; 8272a: second splitting port of a third power divider; 8281a: first splitting port of a fourth power divider; 8282a: second splitting port of a fourth power divider; 83: beamforming unit; 84: control unit; 85: power supply unit;
>
> 86: clock unit; 87: frequency conversion unit; 823: amplifier; 824: filter; 825: coupler; 826: transmission line;
>
> 826-1: first transmission line; 826-2: second transmission line; 826-3: third transmission line; 826-4: fourth transmission line;
>
> 827: third power divider; 828: fourth power divider; 829: phase shifter.

## DESCRIPTION OF EMBODIMENTS

To make the objectives, technical solutions, and advantages of this application clearer, the following further describes this application in detail with reference to the accompanying drawings. However, example implementations can be implemented in a plurality of forms and should not be construed as being limited to implementations described herein. On the contrary, these implementations are provided to make this application more comprehensive and complete and fully convey a concept of the example implementations to a person skilled in the art. Identical reference numerals in the accompanying drawings denote identical or similar structures. Therefore, repeated descriptions thereof are omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that specific details are set forth in the following descriptions for ease of fully understanding this application. However, this application can be implemented in a plurality of manners different from those described herein, and a person skilled in the art can make similar references without departing from the connotation of this application. Therefore, this application is not limited to the descriptions of embodiments disclosed below. The following descriptions of this specification are example implementations of implementing this application. Certainly, the descriptions are intended to describe general principles of this application, and are not intended to limit the scope of this application. The protection scope of this application shall be defined by the appended claims.

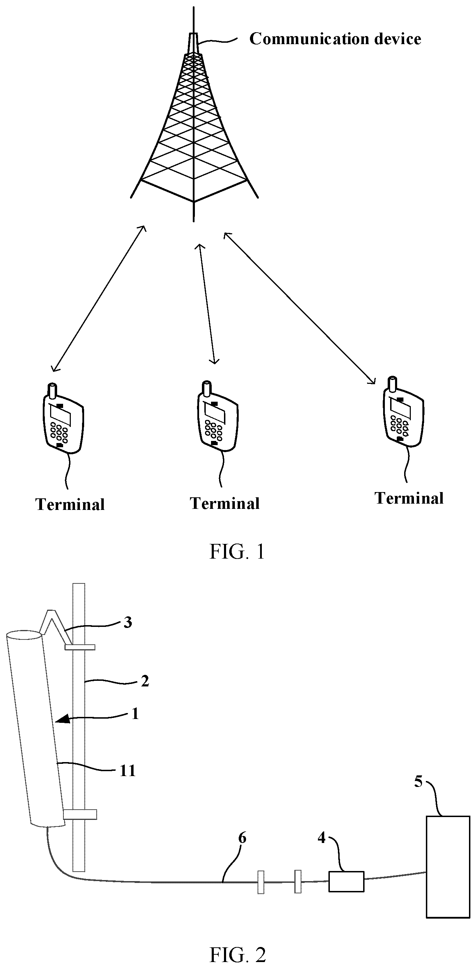

FIG. 1 is an example diagram of an architecture of a system to which an embodiment of this application is applicable. As shown in FIG. 1, the architecture of the system includes a wireless access device and a terminal, and wireless communication may be performed between the wireless access device and the terminal. In the embodiment shown in FIG. 1, an example in which the wireless access device is a base station is used for description. The wireless access device may be located in a base station subsystem (base station subsystem, BSS), a terrestrial radio access network (UMTS terrestrial radio access network, UTRAN), or an evolved terrestrial radio access network (evolved universal terrestrial radio access, E-UTRAN), and is configured to perform cell coverage of a radio signal, to implement connection between a terminal device and a radio frequency end of a wireless network. Specifically, the base station may be a base station (base transceiver station, BTS) in a GSM or CDMA system, may be a base station (NodeB, NB) in a WCDMA system, may be an evolved base station (evolved NodeB, eNB or eNodeB) in a long term evolution (long term evolution, LTE) system, or may be a radio controller in a cloud radio access network (cloud radio access network, CRAN) scenario. Alternatively, the base station may be a relay station, an access point, a vehicle-mounted device, a wearable device, a base station in a 5G network, a base station in a future evolved public land mobile network (public land mobile network, PLMN), or the like, for example, a new radio base station. This is not limited in embodiments of this application.

FIG. 2 is a diagram of a structure of a base station according to an embodiment of this application. The base station includes structures such as an antenna 1, a pole 2, an antenna adjustment bracket 3, a remote radio unit (remote radio unit, RRU) 4, and a baseband processing unit (baseband unit, BBU) 5. The RRU 4 and the BBU 5 may be connected through a cable 6. The antenna 1 may be mounted on the pole 2 or a tower by using the antenna adjustment bracket 3, to facilitate signal receiving or transmitting of the antenna 1. During specific implementation, the antenna may further include a radome 11. The radome 11 has a good electromagnetic wave penetration characteristic in terms of electrical performance, and can withstand impact of an external harsh environment in terms of mechanical performance, so that the antenna 1 can be protected from impact of the external environment.

The RRU 4 may be configured to: perform frequency selection, amplification, and frequency conversion on a signal received by the antenna 1, convert the signal into an intermediate frequency signal or a baseband signal, and send the intermediate frequency signal or the baseband signal to the BBU. Alternatively, the RRU 4 is configured to: perform up-conversion and amplification on the intermediate frequency signal of the BBU, convert the signal into an electromagnetic wave through the antenna 1, and send the electromagnetic wave.

In some embodiments, the RRU 4 may be integrated with the antenna 1, and the BBU is located at a remote end of the antenna 1. In some other embodiments, both the RRU 4 and the BBU 5 may be located at the remote end of the antenna. The RRU 4 and the BBU 5 may be connected through the cable.

In some other embodiments, the base station may alternatively use an architecture of an active antenna unit (active antenna unit, AAU). In this case, in addition to the AAU, the base station may also include structures such as a pole, an antenna adjustment bracket, and a BBU. The AAU may include an antenna, a radio frequency processing unit, and a radome. The antenna and the radio frequency processing unit are disposed in the radome. The radio frequency processing unit is connected to a feed structure of the antenna. The radio frequency processing unit may be configured to: perform frequency selection, amplification, and frequency conversion on a signal received by the antenna, convert the signal into an intermediate frequency signal or a baseband signal, and send the intermediate frequency signal or the baseband signal to the BBU. Alternatively, the radio frequency processing unit is configured to: perform up-conversion and amplification on the intermediate frequency signal of the BBU, convert the signal into an electromagnetic wave through the antenna, and send the electromagnetic wave.

In the foregoing two forms of base stations, the antenna may be a single-band antenna, for example, a frequency band of the antenna may be a frequency band of 24.25 GHz to 27.5 GHz, a frequency band of 26.5 GHz to 29.5 GHz, or a frequency band of 37 GHz to 43 GHz, or may be a dual-band antenna, for example, a frequency band of 26.5 GHz to 29.5 GHz and a frequency band of 37 GHz to 43 GHz. This may be specifically determined according to an actual requirement. This is not limited in this application.

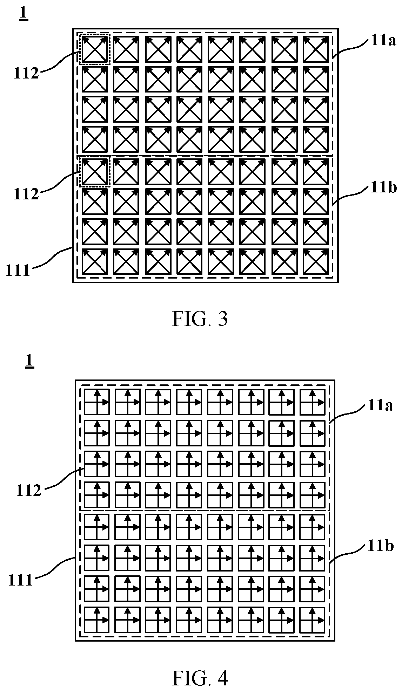

FIG. 3 is a diagram of a structure of an antenna according to an embodiment of this application. An antenna 1 may include a reflector 111 and a plurality of antenna elements 112, and the reflector 111 and the antenna elements 112 may be disposed in a radome 11. The antenna element 112 may also be referred to as an antenna element, an element, or the like, and can effectively send or receive an antenna signal. The reflector 111 may also be referred to as a bottom plate, an antenna panel, a reflective surface, or the like, and may be made of a metal material. When the antenna 1 receives a signal, the reflector 111 may reflect and aggregate the antenna signal at a receive point. When the antenna 1 transmits a signal, a signal transmitted to the reflector 111 is reflected and transmitted. The antenna element 112 is usually placed on a surface of one side of the reflector 111. This can not only greatly enhance a signal receiving or transmitting capability of the antenna, but also block and shield interference, on signal receiving of the antenna, of another wave from a back surface of the reflector 111 (in this application, the back surface of the reflector 111 is a side opposite to a side that is of the reflector 111 and that is used to dispose the antenna element 112).

In this embodiment, the surface of the side of the reflector 111 on which the antenna element 112 is disposed may be divided into a plurality of areas, and each area is equivalent to one array surface of the antenna 1. During specific implementation, the antenna 1 may include two or more array surfaces. In FIG. 3, an example in which the antenna 1 includes two array surfaces 11a and 11b is used for description. Each array surface may include a plurality of antenna elements 112 disposed in an array. FIG. 3 shows a case in which each array surface includes 32 antenna elements 112. It should be understood that quantities of array surfaces of the antenna and antenna elements 112 in each array surface are not limited to the foregoing listed quantities. During actual application, the quantities of array surfaces of the antenna and antenna elements 112 in each array surface may be designed according to a communication requirement of a base station. Details are not described herein again.

In some implementations, the antenna element 112 may be a dual-polarized antenna. In this case, each antenna element 112 corresponds to two signals. Therefore, for a base station in which the antenna shown in FIG. 3 is used, there are 128 signals in total. In other words, there are 128 independent radio frequency channels. Polarization directions of the two signals corresponding to the antenna element 112 may be orthogonal, for example, may be +45 degrees and -45 degrees respectively. In this case, the antenna element 112 may separately radiate signal energy of two corresponding radio frequency channels to space in directions of +45 degrees and -45 degrees polarized electromagnetic waves.

FIG. 4 is a diagram of a structure of another antenna according to an embodiment of this application. In this embodiment, an antenna 1 may also include a plurality of array surfaces (for example, 11a and 11b), and each array surface includes a plurality of antenna elements 112 disposed in an array. Similarly, the antenna element 112 may also be a dual-polarized antenna. Different from the foregoing embodiment, in this embodiment, polarization directions of two signals corresponding to the antenna element 112 may be vertical polarization and horizontal polarization. In this case, the antenna element 112 may separately radiate signal energy of two corresponding channels to space in directions of horizontally and vertically polarized electromagnetic waves.

Currently, with rapid development of 5G technologies, a millimeter-wave frequency band is highly valued due to ultra-wide spectrum resources (such as frequency bands of 24.25 GHz to 27.5 GHz, 26.5 GHz to 29.5 GHz, and 37 GHz to 43 GHz) thereof. To make full use of spectrum resources of the millimeter wave frequency band, under a condition of a limited bandwidth capability of an existing digital chip, some RRUs or AAUs are usually designed to achieve bandwidth enhancement by increasing a quantity of channels of the RRUs or the AAUs. However, this manner causes a reduction of an antenna array surface aperture, and further causes a reduction of effective isotropic radiated power. Because coverage of a millimeter-wave system is limited due to a high frequency band and a large path loss, the foregoing problems further aggravate coverage shrinkage of the millimeter-wave system.

In view of this, an embodiment of this application provides a communication device. The communication device can balance a bandwidth, a quantity of channels, and effective isotropic radiated power without losing an antenna array surface aperture, thereby improving a communication capability and communication quality. The following further describes this application in detail with reference to the accompanying drawings and specific embodiments.

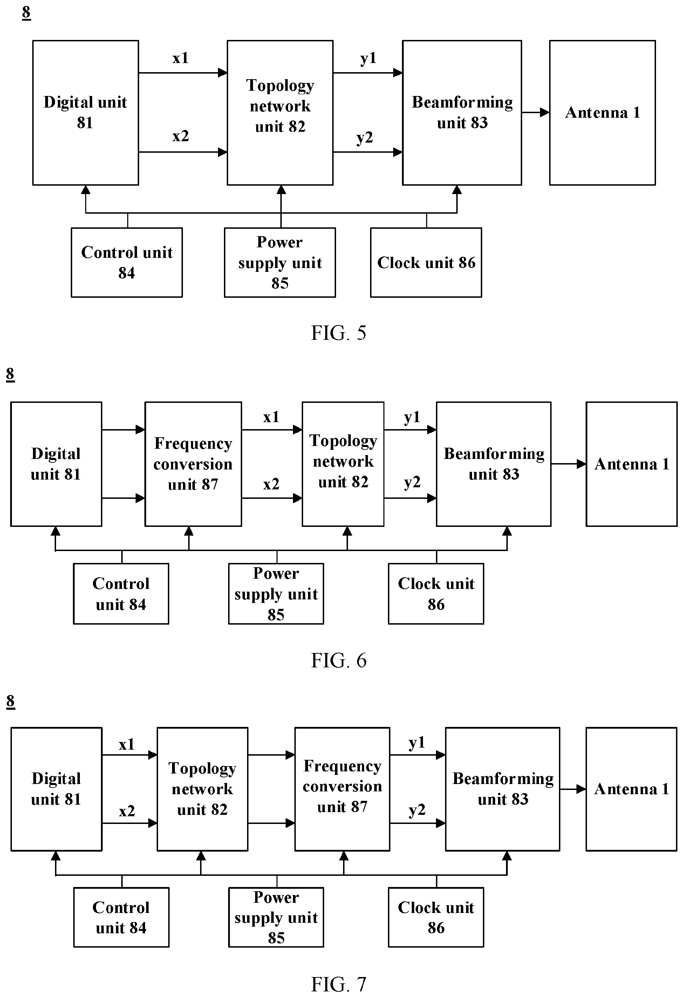

FIG. 5 is a diagram of an architecture of a communication device 8 according to an embodiment of this application. The communication device 8 may be the RRU of the base station shown in FIG. 2, or may be an AAU. This is not limited in this application. The communication device 8 may include a digital unit 81, a topology network unit 82, and a beamforming unit 83. One side of the digital unit 81 may be connected to a BBU, and the other side is connected to the topology network unit 82. One side of the beamforming unit 83 is connected to the topology network unit 82, and the other side may be connected to an antenna 1. The communication device 8 may have a plurality of (for example, $2^n$ or more than $2^n$) radio frequency channels, and each radio frequency channel may be used to transmit one signal. There may be one or more topology network units 82, and each topology network unit 82 may be disposed corresponding to $2^n$ radio frequency channels of the communication device 8, where n is a natural number greater than or equal to 1.

In addition, the communication device 8 may further include a circuit board. The digital unit, the topology network unit, the beamforming unit, and the like may be disposed on the circuit board together, to improve integration of the communication device. Alternatively, in some other implementations, the topology network unit may be integrated into a chip as a whole, and then the chip is packaged on the circuit board. For example, a type of the chip may be a radio frequency chip, a digital chip, or the like. This is not limited in this application.

When the communication device 8 transmits signals, the digital unit 81 may be configured to: receive a plurality of baseband digital signals from the BBU, convert the plurality of baseband digital signals into radio frequency signals, and transmit the radio frequency signals to each topology network unit 82. The topology network unit 82 may be configured to: combine bandwidths of signals in the $2^n$ radio frequency channels corresponding to the topology network unit 82, and transmit a combined signal to the beamforming unit 83. The beamforming unit 83 may be configured to: adjust a phase and an amplitude of a signal in each radio frequency channel, and feed, based on specific phases and amplitudes, the signals in the $2^n$ radio frequency channels corresponding to each topology network unit 82 to the antenna 1 of the base station, and the antenna 1 transmits the signals to space.

On the contrary, when the communication device 8 receives signals, the antenna 1 transmits a plurality of signals received from the space to the beamforming unit 83, and the beamforming unit 83 transmits the plurality of signals to each topology network unit 82 based on a specific phase and amplitude. The topology network unit 82 may be configured to: combine bandwidths of signals in the $2^n$ radio frequency channels corresponding to the topology network unit 82, and transmit a combined signal to the digital unit 81. Then, the digital unit 81 converts the radio frequency signal in each radio frequency channel into a digital baseband signal, and then transmits the digital baseband signal to the BBU.

In some embodiments, the digital unit 81 may include a component such as an analog-to-digital converter (analog-to-digital converter, ADC), a digital-to-analog converter (digital-to-analog converter, DAC), an up converter, a down converter, or a filter. The beamforming unit 83 may include a component such as a phase shifter or a power divider.

Still refer to FIG. 5. The communication device 8 may further include a control unit 84, a power supply unit 85, and a clock unit 86. The control unit 84, the power supply unit 85, and the clock unit 86 may all be connected to the digital unit 81, the topology network unit 82, and the beamforming unit 83. The control unit 84 may be configured to control operation of each unit of the communication device 8 and communication with an external interface. The power supply unit 85 may be configured to: convert a voltage of an external power supply into a voltage that adapts to each unit of the communication device 8, and then supply power to each unit. The clock unit 86 may be configured to: generate a clock signal and provide the clock signal to each unit of the communication device 8, to control related units to operate synchronously.

FIG. 6 is a diagram of an architecture of another communication device 8 according to an embodiment of this application. In this embodiment, the communication device may further include a frequency conversion unit 87. For example, the frequency conversion unit 87 may be connected between a digital unit 81 and a topology network unit 82, and may be configured to implement conversion between a low-frequency signal and a high-frequency signal in each radio frequency channel. It should be noted that, in this embodiment of this application, the low-frequency signal may be understood as a signal whose frequency is less than 10 GHz. Correspondingly, the high-frequency signal may be understood as a signal whose frequency is greater than or equal to 10 GHz, for example, including but not limited to a microwave signal, a millimeter-wave (millimeter-wave) signal, a terahertz-wave signal, or the like. The following embodiment is mainly described by using an example in which the high-frequency signal is the millimeter-wave signal. In this case, in a signal transmitting direction, the frequency conversion unit 87 may be specifically configured to convert a radio frequency signal into a millimeter-wave signal. In a signal receiving direction, the frequency conversion unit 87 is configured to convert a millimeter-wave signal into a low-frequency radio frequency signal.

FIG. 7 is a diagram of an architecture of another communication device 8 according to an embodiment of this application. In this embodiment, similarly, the communication device 8 may further include a frequency conversion unit 87. Different from the embodiment shown in FIG. 6, in this embodiment, the frequency conversion unit 87 may be connected between a topology network unit 82 and a beamforming unit 83. Functions implemented by the frequency conversion unit 87 are the same as those in the foregoing embodiment. Details are not described herein again.

In some embodiments, the topology network unit 82 may include a first power divider 821 and a second power divider 822. The first power divider 821 may include one combining port and $2^n$ splitting ports. Similarly, the second power divider 822 may also include one combining port and $2^n$ splitting ports. The $2^n$ splitting ports of the first power divider 821 may be respectively connected to $2^n$ radio frequency channels on a digital unit side, the combining port of the first power divider 821 is connected to the combining port of the second power divider 822, and the $2^n$ splitting ports of the second power divider 822 are respectively connected to $2^n$ channels on a beamforming unit side. For example, the first power divider 821 and the second power divider 822 include but are not limited to a T-type power divider, a Wilkinson power divider, and the like. This is not limited in this application.

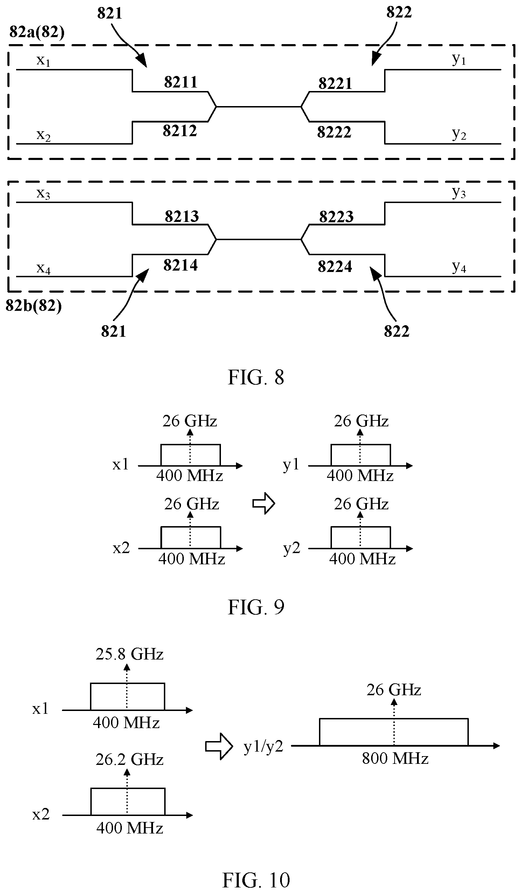

FIG. 8 is a diagram of a structure of a topology network unit 82 according to an embodiment of this application. As shown in FIG. 8, a specific disposition manner of the topology network unit 82 in a case in which n = 1 is described. In this case, each topology network unit 82 corresponds to two radio frequency channels, and a quantity of topology network units 82 in a communication device 8 is half of a total quantity of radio frequency channels. For example, for the antenna shown in FIG. 3 or FIG. 4, 64 topology network units 82 may be disposed in the communication device 8. For any topology network unit 82, on a side that is of the topology network unit 82 and that is connected to a beamforming unit, the beamforming unit may connect each of the two radio frequency channels to one antenna element in two array surfaces of the antenna, or it may be understood as that each antenna element may be connected to one radio frequency channel in the topology network unit. For a dual-polarized antenna, because each antenna element in an array surface corresponds to two signals, the two signals need to be respectively provided by radio frequency channels of two topology network units 82. For ease of description, the two topology network units 82 are defined as a combined unit below. The combined unit corresponds to four radio frequency channels of the communication device 8, and the four radio frequency channels may be separately connected to two antenna elements located on different array surfaces. The four radio frequency channels corresponding to the combined unit are defined as a first channel C1, a second channel C2, a third channel C3, and a fourth channel C4. During specific implementation, one topology network unit 82a of the combined unit is disposed corresponding to the first channel C1 and the second channel C2; and on a beamforming unit side, the first channel C1 and the second channel C2 are respectively connected to the two antenna elements located on the different array surfaces. The other topology network unit 82b is disposed corresponding to the third channel C3 and the fourth channel C4; and on the beamforming unit side, the third channel C3 and the fourth channel C4 are also respectively connected to the two antenna elements.

In the foregoing combined unit, two splitting ports of a first power divider 821 of the topology network unit 82a are defined as a first splitting port 8211 and a second splitting port 8212 respectively, and two splitting ports of a first power divider of the other topology network unit 82b are defined as a third splitting port 8213 and a fourth splitting port 8214 respectively. In addition, two splitting ports of a second power divider 822 of the topology network unit 82a are defined as a fifth splitting port 8221 and a sixth splitting port 8222 respectively, and two splitting ports of a second power divider 822 of the other topology network unit 82b are defined as a seventh splitting port 8223 and an eighth splitting port 8224 respectively. On a side that is of the topology network unit 82 and that is connected to a digital unit, the first channel C1 and the second channel C2 input signals x1 and x2 to the first splitting port 8211 and the second splitting port 8212 respectively, and the third channel C3 and the fourth channel C4 input signals x3 and x4 to the third splitting port 8213 and the fourth splitting port 8214 respectively. On the side that is of the topology network unit 82 and that is connected to the beamforming unit, the fifth splitting port 8221 and the sixth splitting port 8222 output signals y1 and y2 to the first channel C1 and the second channel C2 respectively, and the seventh splitting port 8223 and the eighth splitting port 8224 output signals y3 and y4 to the third channel C3 and the fourth channel C4 respectively.

In a signal transmitting direction, x1 and x2 are transmitted to the topology network unit 82a through the first splitting port 8211 and the second splitting port 8212 respectively. After x1 and x2 pass through the topology network unit 82a, y1 and y2 are output to the beamforming unit through the fifth splitting port 8221 and the sixth splitting port 8222 respectively. It can be learned that y1 = y2 = x1 + x2, which may alternatively be represented as:

$$\begin{pmatrix} y1 \\ y2 \end{pmatrix} = \begin{pmatrix} 1 & 1 \\ 1 & 1 \end{pmatrix} \begin{pmatrix} x1 \\ x2 \end{pmatrix}$$

The beamforming unit may feed y1 and y2 to the two array surfaces of the antenna after adjusting phases and amplitudes of y1 and y2. For example, for the antenna 1 in FIG. 3 or FIG. 4, the beamforming unit may feed the adjusted y1 to one antenna element 112 on an upper array surface 11a, and feed the adjusted y2 to one antenna element 112 on a lower array surface 11b.

Similarly, x3 and x4 are transmitted to the topology network unit 82b through the third splitting port 8213 and the fourth splitting port 8214 respectively. After x3 and x4 pass through the topology network unit 82b, y3 and y4 are output to the beamforming unit through the seventh splitting port 8223 and the eighth splitting port 8224 respectively. y3 = y4 = x3 + x4, which may similarly be represented as:

$$\begin{pmatrix} y3 \\ y4 \end{pmatrix} = \begin{pmatrix} 1 & 1 \\ 1 & 1 \end{pmatrix} \begin{pmatrix} x3 \\ x4 \end{pmatrix}$$

The beamforming unit may feed y3 to the antenna element 112 on the upper array surface 11a after adjusting a phase and an amplitude of y3, and feed y4 to the antenna element 112 on the lower array surface 11b after adjusting a phase and an amplitude of y4.

In a signal receiving direction, the beamforming unit adjusts phases and amplitudes of two signals from the two array surfaces of the antenna, and then outputs y1 and y2. Likewise, the antenna in FIG. 3 or FIG. 4 is used as an example. The two signals may be from one antenna element 112 on the upper array surface 11a and one antenna element 112 on the lower array surface 11a respectively. y1 and y2 are transmitted to the topology network unit 82a through the fifth splitting port 8221 and the sixth splitting port 8222 respectively. After y1 and y2 pass through the topology network unit 82a, x1 and x2 are output through the first splitting port 8211 and the second splitting port 8212 respectively. x1 = x2 = y1 + y2, that is,

$$\begin{pmatrix} x1 \\ x2 \end{pmatrix} = \begin{pmatrix} 1 & 1 \\ 1 & 1 \end{pmatrix} \begin{pmatrix} y1 \\ y2 \end{pmatrix}$$

Similarly, the beamforming unit adjusts a phase and an amplitude of another signal from the antenna element 112 on the upper array surface 11a, and then outputs y3; and adjusts a phase and an amplitude of another signal from the antenna element 112 on the lower array surface 11a, and then outputs y4. y3 and y4 are transmitted to the topology network unit 82b through the seventh splitting port 8223 and the eighth splitting port 8224 respectively. After y3 and y4 pass through the topology network unit 82b, x3 and x4 are output through the third splitting port 8213 and the fourth splitting port 8214 respectively. x3 = x4 = y3 + y4, that is,

$$\begin{pmatrix} x3 \\ x4 \end{pmatrix} = \begin{pmatrix} 1 & 1 \\ 1 & 1 \end{pmatrix} \begin{pmatrix} y3 \\ y4 \end{pmatrix}$$

It can be learned from the foregoing analysis that, both signals in the two radio frequency channels on a digital unit side can be connected to the two array surfaces of the antenna after passing through the topology network unit 82 shown in FIG. 8, which is equivalent to that the two radio frequency channels corresponding to the topology network unit 82 both implement connections to the two array surfaces 11a and 11b of the antenna 1. Therefore, each radio frequency channel can obtain apertures of the two array surfaces 11a and 11b of the antenna 1 (when the antenna 1 has only two array surfaces, all antenna array surface apertures can be obtained). In addition, in the signal transmitting direction, both bandwidths of the two signals y1 and y2 output by the topology network unit 82 are a bandwidth obtained after the signals x1 and x2 are combined, and both bandwidths of the two signals y3 and y4 output by the topology network unit 82 are a bandwidth obtained after the signals x3 and x4 are combined. In the signal receiving direction, both bandwidths of the two signals x1 and x2 output by the topology network unit 82 are a bandwidth obtained after the signals y1 and y2 are combined, and both bandwidths of the two signals x3 and x4 output by the topology network unit 82 are a bandwidth obtained after the signals y3 and y4 are combined. That is, radio frequency bandwidth combination is implemented. The two radio frequency channels corresponding to the topology network unit 82 are equivalent to one radio frequency channel. Therefore, feasibility is provided for bandwidth enhancement of the communication device.

In this embodiment of this application, for each combined unit, when the communication device transmits signals, x1 and x2 may be signals in a same frequency band, or may be signals in different frequency bands. When x1 and x2 are the signals in the same frequency band, center frequencies of x1 and x2 may be the same or different. Similarly, x3 and x4 may be signals in a same frequency band, or may be signals in different frequency bands. When x3 and x4 are the signals in the same frequency band, center frequencies of x3 and x4 may be the same or different. When the communication device receives signals, y1 and y2 may be signals in a same frequency band, or may be signals in different frequency bands. When y1 and y2 are the signals in the same frequency band, center frequencies of y1 and y2 may be the same or different. Similarly, y3 and y4 may be signals in a same frequency band, or may be signals in different frequency bands. When y3 and y4 are the signals in the same frequency band, center frequencies of y3 and y4 may be the same or different.

The following uses one topology network unit 82 in the combined unit as an example to describe the foregoing several different cases in detail.

Refer to FIG. 8 and FIG. 9. In a specific embodiment, in the signal transmitting direction, x1 and x2 are in a same frequency band, and center frequencies and bandwidths of x1 and x2 are the same. For example, both x1 and x2 are in a frequency band of 24.25 GHz to 27.5 GHz, the center frequencies are both 26 GHz, and the bandwidths are both 400 MHz. After x1 and x2 pass through the topology network unit 82, center frequencies of the signals y1 and y2 output through the two splitting ports of the second power divider 822 are both 26 GHz, and bandwidths are both 400 MHz. On the contrary, in the signal receiving direction, y1 and y2 are in a same frequency band, and center frequencies and bandwidths of y1 and y2 are the same. For example, both y1 and y2 are in a frequency band of 24.25 GHz to 27.5 GHz, the center frequencies are both 26 GHz, and the bandwidths are both 400 MHz. After y1 and y2 pass through the topology network unit 82, center frequencies of the signals x1 and x2 output through the two splitting ports of the first power divider 821 are both 26 GHz, and bandwidths are both 400 MHz.

Refer to FIG. 8 and FIG. 10. In another specific embodiment, in the signal transmitting direction, x1 and x2 are in a same frequency band, but center frequencies are different, and bandwidths are the same. For example, both x1 and x2 are in a frequency band of 24.25 GHz to 27.5 GHz, the center frequency of x1 is 25.8 GHz, the bandwidth is 400 MHz, the center frequency of x2 is 26.2 GHz, and the bandwidth is 400 MHz. In this case, center frequencies of the signals y1 and y2 output through the two splitting ports of the second power divider 822 are both 26 GHz, and bandwidths are both 800 MHz. On the contrary, in the signal receiving direction, y1 and y2 are in a same frequency band, but center frequencies are different, and bandwidths are the same. For example, both y1 and y2 are in a frequency band of 24.25 GHz to 27.5 GHz, the center frequency of y1 is 25.8 GHz, the bandwidth is 400 MHz, the center frequency of y2 is 26.2 GHz, and the bandwidth is 400 MHz. In this case, center frequencies of the signals x1 and x2 output through the two splitting ports of the first power divider 821 are both 26 GHz, and bandwidths are both 800 MHz.

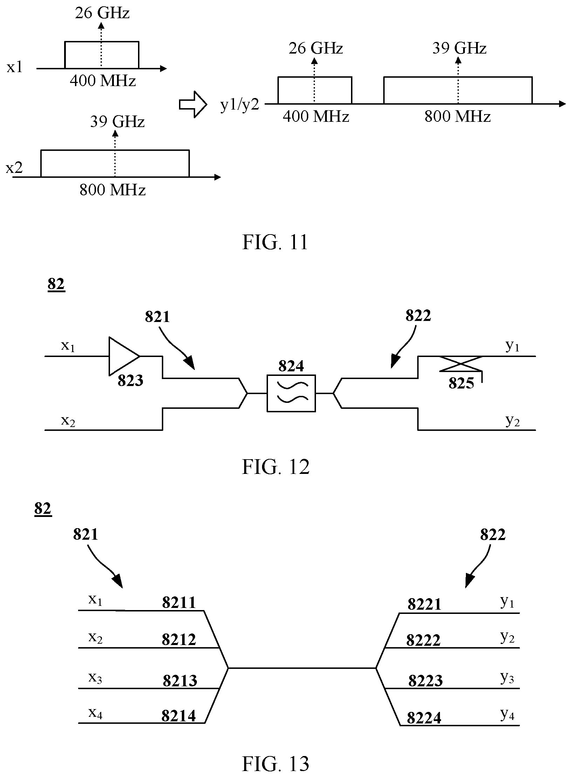

Refer to FIG. 8 and FIG. 11. In another specific embodiment, in the signal transmitting direction, x1 and x2 are in different frequency bands, and bandwidths are also different. For example, x1 is in a frequency band of 24.25 GHz to 27.5 GHz, a center frequency is 26 GHz, a bandwidth is 400 MHz, x2 is in a frequency band of 37 GHz to 43 GHz, a center frequency is 39 GHz, and a bandwidth is 800 MHz. In this case, the signals y1 and y2 output through the two splitting ports of the second power divider 822 each have two frequency bands. A center frequency of one frequency band is 26 GHz, and a bandwidth is 800 MHz. A center frequency of the other frequency band is 39 GHz, and a bandwidth is 800 MHz. On the contrary, in the signal receiving direction, y1 and y2 are in different frequency bands and bandwidths are different. For example, y1 is in a frequency band of 24.25 GHz to 27.5 GHz, a center frequency is 26 GHz, a bandwidth is 400 MHz, y2 is in a frequency band of 37 GHz to 43 GHz, a center frequency is 39 GHz, and a bandwidth is 800 MHz. In this case, the signals x1 and x2 output through the two splitting ports of the first power divider 821 each have two frequency bands. A center frequency of one frequency band is 26 GHz, and a bandwidth is 800 MHz. A center frequency of the other frequency band is 39 GHz, and a bandwidth is 800 MHz.

FIG. 12 is a diagram of a structure of another topology network according to an embodiment of this application. In some embodiments, a topology network unit 82 may further include an amplifier 823. The amplifier 823 may be disposed at a splitting port of a first power divider 821 or a combining port of the first power divider 821, to amplify power of a signal in a radio frequency channel. Certainly, in some other embodiments, the amplifier 823 may alternatively be disposed at a splitting port or a combining port of a second power divider 822. Alternatively, amplifiers may be disposed at each splitting port and combining port of the first power divider 821 and each splitting port of the second power divider 822. A specific disposition position and quantity of amplifiers in the topology network unit 82 are not limited in this application, and may be designed according to an actual requirement. FIG. 12 shows a case in which the amplifier is disposed at one splitting port of the first power divider 821.

In some embodiments, the topology network unit 82 may further include a filter 824. The filter 824 may be disposed at the splitting port of the first power divider 821 or the combining port of the first power divider 821, to filter the signal in the radio frequency channel, and therefore suppress electromagnetic energy in a non-operating frequency band. Certainly, in some other embodiments, the filter 824 may alternatively be disposed at the splitting port or the combining port of the second power divider 822. Alternatively, filters 824 may be disposed at each splitting port and combining port of the first power divider 821 and each splitting port of the second power divider 822. A specific disposition position and quantity of filters 824 in the topology network unit 82 are not limited in this application, and may be designed according to an actual requirement. FIG. 12 shows a case in which the filter 824 is disposed at the combining port of the first power divider 821. In this case, it may also be understood that the filter 824 is disposed at the combining port of the second power divider 822.

In some embodiments, the topology network unit 82 may further include a coupler 825. The coupler 825 may be disposed at the splitting port of the first power divider 821 or the combining port of the first power divider 821, to feed back the signal in the radio frequency channel, and therefore facilitate subsequent correction of the signal. Certainly, in some other embodiments, the coupler 825 may alternatively be disposed at the splitting port or the combining port of the second power divider 822. Alternatively, couplers 825 may be disposed at each splitting port and combining port of the first power divider 821 and each splitting port of the second power divider 822. A specific disposition position and quantity of couplers 825 in the topology network unit 82 are not limited in this application, and may be designed according to an actual requirement. FIG. 12 shows a case in which the coupler 825 is disposed at one splitting port of the second power divider 822.

FIG. 13 shows another topology network unit 82 according to an embodiment of this application. The topology network unit 82 shows a case in which n = 2; to be specific, each topology network unit 82 is disposed corresponding to four radio frequency channels of a communication device. For any topology network unit 82, on a side that is of the topology network unit 82 and that is connected to a beamforming unit, the beamforming unit may connect each of the four radio frequency channels to one antenna element in two array surfaces of an antenna. Similarly, four splitting ports of a first power divider 821 of the topology network unit 82 are defined as a first splitting port 8211, a second splitting port 8212, a third splitting port 8213, and a fourth splitting port 8214 respectively, and four splitting ports of a second power divider 822 are defined as a fifth splitting port 8221, a sixth splitting port 8222, a seventh splitting port 8223, and an eighth splitting port 8224 respectively. On a side that is of the topology network unit 82 and that is connected to a digital unit, a first channel C1 inputs a signal x1 to the first splitting port 8211, a second channel C2 inputs a signal x2 to the second splitting port 8212, a third channel C3 inputs a signal x3 to the third splitting port 8213, and a fourth channel C4 inputs a signal x4 to the fourth splitting port 8214. On the side that is of the topology network unit 82 and that is connected to beamforming unit, the fifth splitting port 8221 outputs a signal y1 to the first channel C1, the sixth splitting port 8222 outputs a signal y2 to the second channel C2, the seventh splitting port 8223 outputs a signal y3 to the third channel C3, and the eighth splitting port 8224 outputs a signal y4 to the fourth channel C4.

In a signal transmitting direction, x1, x2, x3, and x4 are transmitted to the topology network unit 82 through the four splitting ports of the first power divider 821 respectively. After x1, x2, x3, and x4 pass through the topology network unit 82, y1, y2, y3, and y4 are output to the beamforming unit through the four splitting ports of the second power divider 822 respectively. It can be learned that y1 = y2 = y3 = y4 = x1 + x2 + x3 + x4, which may also be represented as:

$$\begin{pmatrix} y1 \\ y2 \\ y3 \\ y4 \end{pmatrix} = \begin{pmatrix} 1 & 1 & 1 & 1 \\ 1 & 1 & 1 & 1 \\ 1 & 1 & 1 & 1 \\ 1 & 1 & 1 & 1 \end{pmatrix} \begin{pmatrix} x1 \\ x2 \\ x3 \\ x4 \end{pmatrix}$$

The beamforming unit may feed y1 and y3 to one antenna element on one array surface of the antenna after adjusting phases and amplitudes of y1 and y3, to provide two signals for the antenna element. In addition, the beamforming unit may feed y2 and y4 to one antenna element on the other array surface of the antenna after adjusting phases and amplitudes of y2 and y4, to provide two signals for the antenna element. For example, for the antenna 1 in FIG. 3 or FIG. 4, the beamforming unit may feed the adjusted y1 and y3 to one antenna element 112 on an upper array surface 11a, and feed the adjusted y2 and y4 to one antenna element 112 on a lower array surface 11b.

In a signal receiving direction, the beamforming unit adjusts phases and amplitudes of four signals of two antenna elements from different array surfaces, and then outputs y1, y2, y3, and y4. Likewise, the antenna in FIG. 3 or FIG. 4 is used as an example. y1 and y3 in the four signals may be from one antenna element 112 on the upper array surface 11a, and y2 and y4 may be from one antenna element 112 on the lower array surface 11b. y1, y2, y3, and y4 are transmitted to the topology network unit 82 through the four splitting ports of the second power divider 822 respectively. After y1, y2, y3, and y4 pass through the topology network unit 82, x1, x2, x3, and x4 are output through the four splitting ports of the first power divider 821. x1 = x2 = x3 = x4 = y1 + y2 + y3 + y4, that is,

$$\begin{pmatrix} x1 \\ x2 \\ x3 \\ x4 \end{pmatrix} = \begin{pmatrix} 1 & 1 & 1 & 1 \\ 1 & 1 & 1 & 1 \\ 1 & 1 & 1 & 1 \\ 1 & 1 & 1 & 1 \end{pmatrix} \begin{pmatrix} y1 \\ y2 \\ y3 \\ y4 \end{pmatrix}$$

It can be learned from the foregoing analysis that, all signals in the four radio frequency channels on a digital unit side can be connected to the two array surfaces 11a and 11b of the antenna 1 after passing through the topology network unit 82 shown in FIG. 13, which is equivalent to that the four radio frequency channels corresponding to the topology network unit 82 all implement connections to the two array surfaces 11a and 11b of the antenna 1. Therefore, each radio frequency channel can obtain apertures of the two array surfaces of the antenna 1 (when the antenna has only two array surfaces, all antenna array surface apertures can be obtained). In addition, in the signal transmitting direction, bandwidths of the four signals y1, y2, y3, and y4 output by the topology network unit 82 are all bandwidths obtained after the signals x1, x2, x3, and x4 are combined. In the signal receiving direction, bandwidths of the four signals x1, x2, x3, and x4 output by the topology network unit 82 are all bandwidths obtained after the signals y1, y2, y3, and y4 are combined. That is, radio frequency bandwidth combination is implemented. Therefore, feasibility is provided for bandwidth enhancement of the communication device.

Moreover, in this embodiment, for each topology network unit 82, when the communication device transmits signals, frequency bands of x1, x2, x3, and x4 may be set with reference to the foregoing embodiment. Similarly, when the communication device receives signals, frequency bands of y1, y2, y3, and y4 may also be set with reference to the foregoing embodiment. Details are not described herein again.

The foregoing embodiments describe two cases in which n = 1 and n = 2 respectively. When n is 3 or another value greater than 3, setting may be performed with reference to the case in which n = 2. For example, when n = 3, the topology network unit 82 is disposed corresponding to eight radio frequency channels of the communication device. On a side that is of the topology network unit 82 and that is connected to the beamforming unit, the beamforming unit may connect the eight radio frequency channels to one antenna element on four array surfaces of the antenna respectively. When n = 4, the topology network unit 82 is disposed corresponding to 16 radio frequency channels of the communication device. On a side that is of the topology network unit 82 and that is connected to the beamforming unit, the beamforming unit may connect the 16 radio frequency channels to one antenna element on eight array surfaces of the antenna respectively. The rest may be deduced by analogy. It can be learned that, in a case in which $n \geq 2$, there are at least $2^{n-1}$ array surfaces included in the antenna. When there are $2^{n-1}$ array surfaces of the antenna, each radio frequency channel corresponding to the topology network unit 82 may obtain the all antenna array surface apertures.

In some other embodiments, the topology network unit 82 may include the first power divider 821, the second power divider 822, $2^n$ transmission lines 826, and $2^{n+1}$ switches S1 to S2$^{n+1}$. Similar to the foregoing embodiment, the first power divider 821 may include one combining port and $2^n$ splitting ports. Similarly, the second power divider 822 may also include one combining

port and $2^n$ splitting ports. The combining port of the first power divider 821 is connected to the combining port of the second power divider 822. In the $2^{n+1}$ switches, $2^n$ switches are disposed on the digital unit side and are in a one-to-one correspondence with $2^n$ radio frequency channels, and the other $2^n$ switches are disposed on a beamforming unit side and are in a one-to-one correspondence with the $2^n$ radio frequency channels.

On the digital unit side, each of the switches may be configured to switchably connect a corresponding radio frequency channel between one splitting port of the first power divider 821 and one end of one of the transmission lines. On the beamforming unit side, each of the switches may be configured to switchably connect the corresponding radio frequency channel between one splitting port of the second power divider 822 and the other end of the one of the transmission lines.

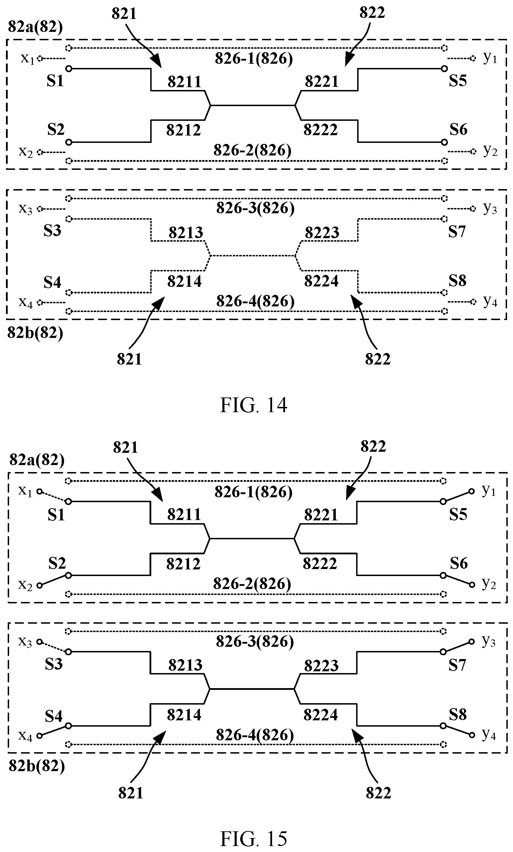

FIG. 14 is a diagram of a structure of another topology network unit 82 according to an embodiment of this application. In FIG. 14, a specific disposition manner of the topology network unit 82 is described by using a case in which n = 1 as an example. Similar to the foregoing embodiment, two topology network units 82 are still defined as one combined unit below. The combined unit is disposed corresponding to four radio frequency channels of a communication device, and the four radio frequency channels may be respectively connected to two antenna elements located on different array surfaces. In the combined unit, splitting ports of each power divider of the two topology network units 82 and radio frequency channels corresponding to the splitting ports may be defined with reference to the embodiment shown in FIG. 8. When n = 1, one topology unit includes two transmission lines and four switches. Two transmission lines of one topology network unit 82a are defined as a first transmission line 826-1 and a second transmission line 826-2 respectively, and two transmission lines of the other topology network unit 82b are defined as a third transmission line 826-3 and a fourth transmission line 826-4 respectively. Two switches that are of one topology network unit 82b and that are disposed on a digital unit side are defined as a first switch S1 and a second switch S2 respectively, and two switches that are of the other topology network unit 82b and that are disposed on the digital unit side are defined as a third switch S3 and a fourth switch S4 respectively. Two switches that are of one topology network unit 82a and that are disposed on a beamforming unit side are defined as a fifth switch S5 and a sixth switch S6 respectively, and two switches that are of the other topology network unit 82b and that are disposed on the beamforming unit side are defined as a seventh switch S7 and an eighth switch S8 respectively.

During specific implementation, on a side that is of the topology network unit 82 and that is connected to a digital unit, the first switch S1 may be configured to switchably connect a first channel C1 between a first splitting port 8211 and one end of the first transmission line 826-1. The second switch S2 may be configured to switchably connect a second channel C2 between a second splitting port 8212 and one end of the second transmission line 826-2. The third switch S3 may be configured to switchably connect a third channel C3 between a third splitting port 8213 and one end of the third transmission line 826-3. The fourth switch S4 may be configured to switchably connect a fourth channel C4 between a fourth splitting port 8214 and one end of the fourth transmission line 826-4.

On a side that is of the topology network unit 82 and that is connected to a beamforming unit, the fifth switch S5 may be configured to switchably connect the first channel C1 between a fifth splitting port 8221 and the other end of the first transmission line 826-1. The sixth switch S6 may be configured to switchably connect the second channel C2 between a sixth splitting port 8222 and the other end of the second transmission line 826-2. The seventh switch S7 may be configured to switchably connect the third channel C3 between a seventh splitting port 8223 and the other end of the third transmission line 826-3. The eighth switch S8 may be configured to switchably connect the fourth channel C4 between an eighth splitting port 8224 and the other end of the fourth transmission line 826-4.

In this embodiment, the topology network unit 82 may also be switched between two operating modes by switching a connection status of each switch. The following describes the two operating modes of the topology network unit 82 separately.

FIG. 15 is a diagram of a state of the topology network unit 82 shown in FIG. 14 in a first operating mode. In this operating mode, on the side that is of the topology network unit 82 and that is connected to the digital unit, the first switch S1 connects the first channel C1 to the first splitting port 8211, the second switch S2 connects the second channel C2 to the second splitting port 8212, the third switch S3 connects the third channel C3 to the third splitting port 8213, and the fourth switch S4 connects the fourth channel C4 to the fourth splitting port 8214. On the side that is of the topology network unit 82 and that is connected to beamforming unit, the fifth switch S5 connects the first channel C1 to the fifth splitting port 8221, the sixth switch S6 connects the second channel C2 to the sixth splitting port 8222, the seventh switch S7 connects the third channel C3 to the seventh splitting port 8223, and the eighth switch S8 connects the fourth channel C4 to the eighth splitting port 8224. In this case, a function implemented by the topology network unit is the same as that implemented in the embodiment shown in FIG. 8. To be specific, each radio frequency channel corresponding to the topology network unit 82 may obtain apertures of two array surfaces of the antenna, and can implement radio frequency bandwidth combination. For a specific implementation process, refer to the descriptions in the foregoing embodiment. Details are not described herein again.

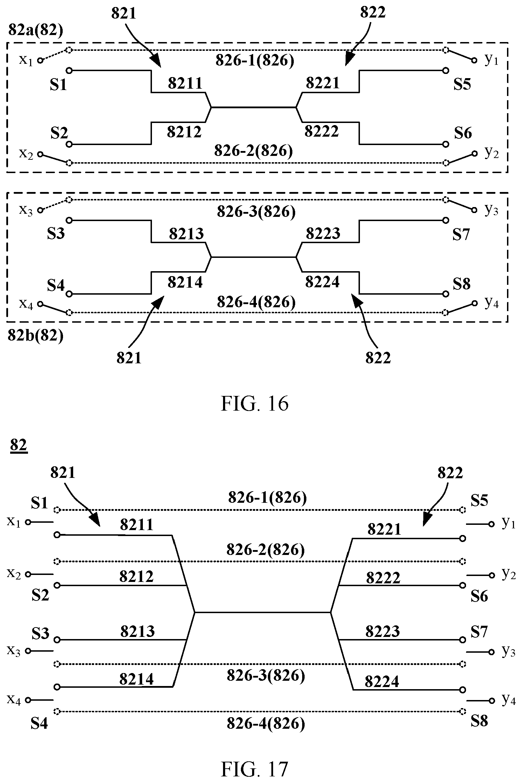

FIG. 16 is a diagram of a state of the topology network unit shown in FIG. 14 in a second operating mode. In this operating mode, on the side that is of the topology network unit 82 and that is connected to the digital unit, the first switch S1 connects the first channel C1 to one end of the first transmission line 826-1, the second switch S2 connects the second channel C2 to one end of the second transmission line 826-2, the third switch S3 connects the third channel C3 to one end of the third transmission line 826-3, and the fourth switch S4 connects the fourth channel C4 to one end of the fourth transmission line 826-4. On the side that is of the topology network unit 82 and that is connected to the beamforming unit, the fifth switch S5 connects the first channel C1 to the other end of the first transmission line 826-1, the sixth switch S6 connects the second channel C2 to the other end of the second transmission line 826-2, the seventh switch S7 connects the third channel C3 to the other end of the third transmission line 826-3, and the eighth switch S8 connects the fourth channel C4 to the other end of the fourth transmission line 826-4.

In a signal transmitting direction, the first channel C1 and the second channel C2 that are on the digital unit side input signals x1 and x2 to the topology network unit 82a respectively, and y1 and y2 output by the topology network unit 82a satisfy: y1 = x1 and y2 = x2, which may also be represented as:

$$\begin{pmatrix} y1 \\ y2 \end{pmatrix} = \begin{pmatrix} 1 & 0 \\ 0 & 1 \end{pmatrix} \begin{pmatrix} x1 \\ x2 \end{pmatrix}$$

The beamforming unit may feed y1 and y2 to the two array surfaces of the antenna after adjusting phases and amplitudes of y1 and y2. For example, for the antenna in FIG. 3 or FIG. 4, the beamforming unit may feed the adjusted y1 to one antenna element 112 on an upper array surface 11a, and feed the adjusted y2 to one antenna element 112 on a lower array surface 11b.

Similarly, the third channel C3 and the fourth channel C4 that are on the digital unit side input signals x3 and x4 to the topology network unit 82b respectively, and y3 and y4 output by the topology network unit 82b satisfy: y3 = x3 and y4 = x4, which may also be represented as:

$$\begin{pmatrix} y3 \\ y4 \end{pmatrix} = \begin{pmatrix} 1 & 0 \\ 0 & 1 \end{pmatrix} \begin{pmatrix} x3 \\ x4 \end{pmatrix}$$

The beamforming unit may feed y3 to the antenna element 112 on the upper array surface 11a after adjusting a phase and an amplitude of y3, and feed y4 to the antenna element 112 on the lower array surface 11b after adjusting a phase and an amplitude of y4.

In a signal receiving direction, the beamforming unit adjusts phases and amplitudes of two signals from the two array surfaces of the antenna, and then outputs y1 and y2. Likewise, the antenna in FIG. 3 or FIG. 4 is used as an example. The two signals may be from one antenna element 112 on the upper array surface 11a and one antenna element 112 on the lower array surface 11b respectively. x1 and x2 output by the topology network unit 82a satisfy: x1 = y1 and x2 = y2, that is,

$$\begin{pmatrix} x1 \\ x2 \end{pmatrix} = \begin{pmatrix} 1 & 0 \\ 0 & 1 \end{pmatrix} \begin{pmatrix} y1 \\ y2 \end{pmatrix}$$

Similarly, the beamforming unit adjusts a phase and an amplitude of another signal from the antenna element 112 on the upper array surface 11a, and then outputs y3, and adjusts a phase and an amplitude of another signal from the antenna element 112 on the lower array surface 11b, and then outputs y4. x3 and x4 output by the topology network unit 82a satisfy: x3 = y3 and x4 = y4, that is,

$$\begin{pmatrix} x3 \\ x4 \end{pmatrix} = \begin{pmatrix} 1 & 0 \\ 0 & 1 \end{pmatrix} \begin{pmatrix} y3 \\ y4 \end{pmatrix}$$

It can be learned from the foregoing analysis that, in the second operating mode of the topology network unit 82, after signals in two radio frequency channels on the digital unit side pass through the topology network unit 82, each radio frequency channel is connected to one array surface 11a (or 11b). In this case, the communication device has an advantage of a plurality of channels in a conventional solution, and the antenna 1 may implement a degree of freedom of a plurality of beams, and therefore implement a multi-user scheduling function.

Therefore, in this embodiment, a connection status of each switch may be adjusted, so that the topology network unit 82 can flexibly switch between the foregoing two operating modes, thereby balancing advantages of the two operating modes, and further helping a communication device using the topology network unit be applicable to more scenarios.

Moreover, in this embodiment, for each combined unit, when the communication device transmits signals, frequency bands of x1, x2, x3, and x4 may be set with reference to the foregoing embodiment. Similarly, when the communication device receives signals, frequency bands of y1, y2, y3, and y4 may also be set with reference to the foregoing embodiment. Details are not described herein again. It should be noted that a model of each switch may be selected based on a signal in a radio frequency channel corresponding to the switch. For example, when x1 is in a frequency band of 26 GHz and x2 is in a frequency band of 39 GHz, the first switch and the second switch may select models that support 26 GHz and 39 GHz respectively.

In the foregoing embodiment, a case in which two ends of each transmission line are correspondingly connected to a same radio frequency channel on two sides of the topology network unit is described. In some other implementations, transmission lines and the four radio frequency channels corresponding to the topology network unit may alternatively be disposed in a cross manner. For example, on the digital unit side, one end of the first transmission line may be disposed corresponding to the first switch together with the first splitting port, to implement a connection to the first channel when the first switch performs switching. On the beamforming unit side, the other end of the first transmission line may be disposed corresponding to the second switch together with the sixth splitting port, to implement a connection to the second channel when the second switch performs switching. In this case, a correspondence between another transmission line and another radio frequency channel may also change correspondingly. A specific cross manner is not limited, provided that a one-to-one correspondence between the transmission line and the radio frequency channel is met.

FIG. 17 is a diagram of a structure of another topology network unit 82 according to an embodiment of this application. The topology network unit 82 shows a case in which n = 2; to be specific, each topology network unit 82 is disposed corresponding to four radio frequency channels of a communication device. The four radio frequency channels corresponding to the topology network unit 82 may also be defined as a first channel C1, a second channel C2, a third channel C3, and a fourth channel C4 respectively. Splitting ports of each power divider of the topology network unit 82 may be defined with reference to the embodiment shown in FIG. 13. In addition, four transmission lines of the topology network unit 82 may be defined as a first transmission line 826-1 to a fourth transmission line 826-4 respectively. Four switches that are of the topology network unit 82 and that are disposed on a digital unit side may be defined as a first switch S1 to a fourth switch S4 respectively, and four switches on a beamforming unit side may be defined as a fifth switch S5 to an eighth switch S8 respectively.

During specific implementation, a correspondence between each radio frequency channel corresponding to the topology network unit 82 and each switch thereof and a correspondence between each switch and both each transmission line and each splitting port may be set with reference to the foregoing embodiment. Details are not described herein again.

Similar to the foregoing embodiment, in this embodiment, the topology network unit 82 may also be switched between two operating modes by switching a connection status of each switch. The following describes the two operating modes of the topology network unit 82 separately.

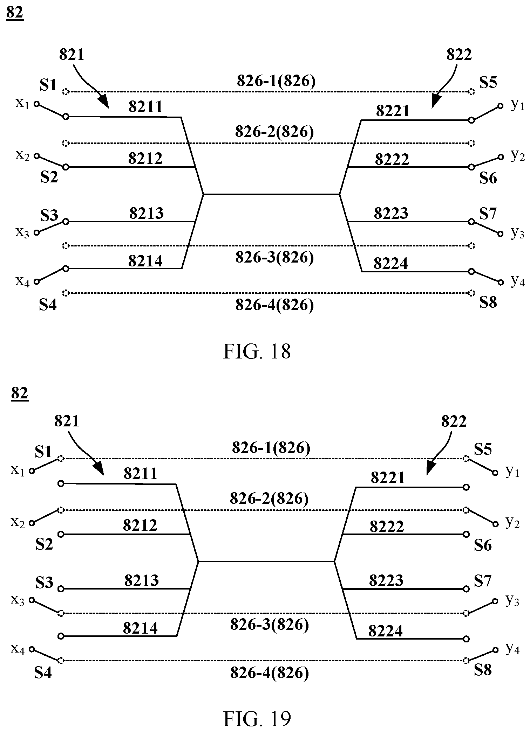

FIG. 18 is a diagram of a state of the topology network unit 82 shown in FIG. 17 in a first operating mode. A connection status of each switch in the operating mode may be set with reference to the status in the first operating mode in the foregoing embodiment. In this case, a function implemented by the topology network unit 82 is the same as that implemented in the embodiment shown in FIG. 13. To be specific, each radio frequency channel corresponding to the topology network unit 82 may obtain apertures of two array surfaces of an antenna, and can implement radio frequency bandwidth combination. For a specific implementation process, refer to the descriptions in the embodiment shown in FIG. 13. Details are not described herein again.

FIG. 19 is a diagram of a state of the topology network unit 82 shown in FIG. 17 in a second operating mode. A connection status of each switch in the operating mode may be set with reference to the status in the second operating mode in the foregoing embodiment.

In a signal transmitting direction, the first channel C1, the second channel C2, the third channel C3, and the fourth channel C4 on the digital unit side input signals x1, x2, x3, and x4 to the topology network unit 82 respectively, and y1, y2, y3, and y4 output by the topology network unit 82 satisfy: y1 = x1, y2 = x2, y3 = x3, and y4 = x4, which may also be represented as:

$$\begin{pmatrix} y1 \\ y2 \\ y3 \\ y4 \end{pmatrix} = \begin{pmatrix} 1 & 0 & 0 & 0 \\ 0 & 1 & 0 & 0 \\ 0 & 0 & 1 & 0 \\ 0 & 0 & 0 & 1 \end{pmatrix} \begin{pmatrix} x1 \\ x2 \\ x3 \\ x4 \end{pmatrix}$$

A beamforming unit may feed y1 and y3 to one antenna element on one array surface of the antenna after adjusting phases and amplitudes of y1 and y3, to provide two signals for the antenna element. In addition, the beamforming unit may feed y2 and y4 to one antenna element on the other array surface of the antenna after adjusting phases and amplitudes of y2 and y4, to provide two signals for the antenna element. For example, for the antenna 1 in FIG. 3 or FIG. 4, the beamforming unit may feed the adjusted y1 and y3 to one antenna element 112 on an upper array surface 11a, and feed the adjusted y2 and y4 to one antenna element 112 on a lower array surface 11b.

In a signal receiving direction, the beamforming unit adjusts phases and amplitudes of four signals of two antenna elements from different array surfaces, and then outputs y1, y2, y3, and y4. Likewise, the antenna in FIG. 3 or FIG. 4 is used as an example. y1 and y3 in the four signals may be from one antenna element 112 on the upper array surface 11a, and y2 and y4 may be from one antenna element 112 on the lower array surface 11b. x1, x2, x3, and x4 output by the topology network unit 82 satisfy: x1 = y1, x2 = y2, x3 = y3, x4 = y4, that is,

$$\begin{pmatrix} x1 \\ x2 \\ x3 \\ x4 \end{pmatrix} = \begin{pmatrix} 1 & 0 & 0 & 0 \\ 0 & 1 & 0 & 0 \\ 0 & 0 & 1 & 0 \\ 0 & 0 & 0 & 1 \end{pmatrix} \begin{pmatrix} y1 \\ y2 \\ y3 \\ y4 \end{pmatrix}$$

It can be learned from the foregoing analysis that, in the second operating mode of the topology network unit 82, after signals in the four radio frequency channels on the digital unit side pass through the topology network unit 82, each radio frequency channel is connected to one array surface. In this case, the communication device has an advantage of a plurality of channels in a conventional solution, and the antenna may implement a degree of freedom of a plurality of beams, and therefore implement a multi-user scheduling function.

Moreover, in this embodiment, for each topology network unit 82, when the communication device transmits signals, frequency bands of x1, x2, x3, and x4 may be set with reference to the foregoing embodiment. Similarly, when the communication device receives signals, frequency bands of y1, y2, y3, and y4 may also be set with reference to the foregoing embodiment. Details are not described herein again. In addition, a model of each switch may also be selected based on a signal in a radio frequency channel corresponding to the switch. Details are not described herein again.

The foregoing embodiments describe the cases in which n = 1 and n = 2 for the topology network unit with two operating modes respectively. When n is 3 or another value greater than 3, setting may be performed with reference to the case in which n = 2. In a case in which $n \geq 2$, there are at least $2^{n-1}$ array surfaces included in the antenna. When there are $2^{n-1}$ array surfaces of the antenna, each radio frequency channel corresponding to the topology network unit in the first operating mode may obtain all antenna array surface apertures.

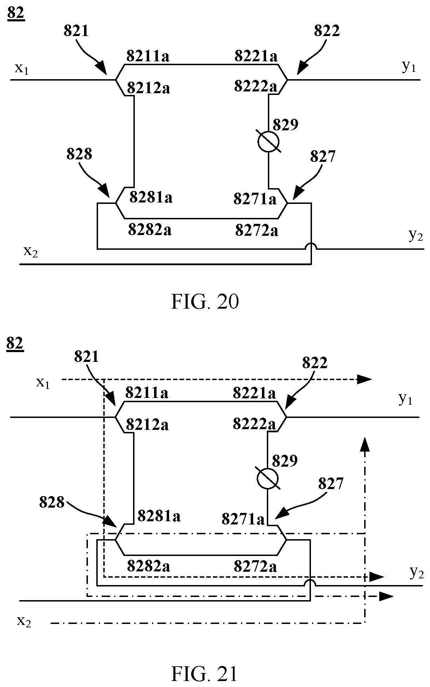

FIG. 20 is a diagram of a structure of another topology network unit 82 according to an embodiment of this application. In this embodiment, the topology network unit 82 may include a first power divider 821, a second power divider 822, a third power divider 827, a fourth power divider 828, and a phase shifter 829. Each power divider may include one combining port and two splitting ports. During specific implementation, a combining port of the first power divider 821 and a combining port of the third power divider 827 may be respectively connected to two radio frequency channels on a digital unit side, and a combining port of the second power divider 822 and a combining port of the fourth power divider 828 may be respectively connected to two radio frequency channels on a beamforming unit side. A first splitting port 8211a of the first power divider 821 is connected to a first splitting port 8221a of the second power divider 822, a second splitting port 8212a of the first power divider 821 is connected to a first splitting port 8281a of the fourth power divider 828, a first splitting port 8271a of the third power divider 827 is connected to a second splitting port 8222a of the second power divider 822, and a second splitting port 8272a of the third power divider 827 is connected to a second splitting port 8282a of the fourth power divider 828. The phase shifter 829 may be connected between the first splitting port 8271a of the third power divider 827 and the second splitting port 8222a of the second power divider 822, and a phase of the phase shifter 829 may be switched between 0° or 180°.

The two radio frequency channels corresponding to the topology network unit 82 are defined as a first channel C1 and a second channel C2 respectively. On a side that is of the topology network unit 82 and that is connected to a digital unit, the first channel C1 and the second channel C2 input signals x1 and x2 to the combining port of the first power divider 821 and the combining port of the third power divider 827. On a side that is of the topology network unit 82 and that is connected to a beamforming unit, the combining port of the second power divider 822 and the combining port of the fourth power divider 828 output signals y1 and y2 to the first channel C1 and the second channel C2 respectively.

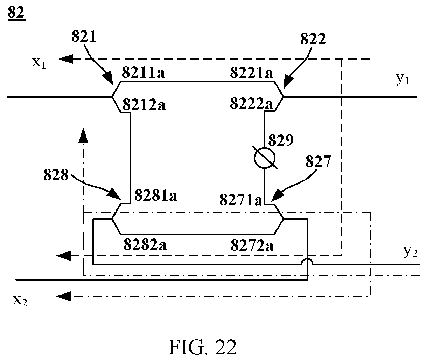

Refer to FIG. 21 and FIG. 22 together. FIG. 21 is a diagram of a signal flow direction of the topology network unit shown in FIG. 20 in a transmitting direction. FIG. 22 is a diagram of a signal flow direction of the topology network unit shown in FIG. 20 in a receiving direction. In the signal transmitting direction, the first splitting port 8211a of the first power divider 821 may transmit x1 to the first splitting port 8221a of the second power divider 822, and the second splitting port 8212a of the first power divider 821 may transmit x1 to the first splitting port 8281a of the fourth power divider 828. The first splitting port 8271a of the third power divider 827 may transmit x2 to the second splitting port 8222a of the second power divider 822 after passing through the phase shifter 829, and the second splitting port 8272a of the third power divider 827 may transmit x2 to the second splitting port 8282a of the fourth power divider 828. In the signal receiving direction, the first splitting port 8221a of the second power divider 822 may transmit y1 to the first splitting port 8211a of the first power divider 821, the second splitting port 8222a of the second power divider 822 may transmit y1 to the first splitting port 8271a of the third power divider 827 after passing through the phase shifter 829, the first splitting port 8281a of the fourth power divider 828 may transmit y2 to the second splitting port 8212a of the first power divider 821, and the second splitting port 8282a of the fourth power divider 828 may transmit y2 to the second splitting port 8272a of the third power divider 827.

By switching a phase of the phase shifter 829, a phase of a signal transmitted by the first splitting port 8271a of the third power divider 827 to the second splitting port 8222a of the second power divider 822 may be changed, so that y1 output by the combining port of the second power divider 822 is changed. Therefore, the topology network unit 82 implements switching between the two operating modes.

In addition, in this embodiment, two topology network units 82 may also be defined as a combined unit. The combined unit may be disposed corresponding to four radio frequency channels of a communication device, and the four radio frequency channels may be respectively connected to two antenna elements located on different array surfaces. The following mainly uses one topology network unit 82 as an example to describe the two operating modes of the topology network unit 82.

When the phase of the phase shifter 829 is 0°, effect of +1 may be implemented. In this case, the signal transmitted by the first splitting port 8271a of the third power divider 827 to the second splitting port 8222a of the second power divider 822 is still x2. In the signal transmitting direction, y1 = y2 = x1 + x2. In the signal receiving direction, x1 = x2 = y1 + y2. It can be learned that, in this operating mode, a function implemented by the topology network unit 82 is the same as that implemented in the embodiment shown in FIG. 8. To be specific, each radio frequency channel corresponding to the topology network unit 82 may obtain apertures of two array surfaces of the antenna, and can implement radio frequency bandwidth combination. For a specific implementation process, refer to the descriptions in the foregoing embodiment. Details are not described herein again.

When the phase of the phase shifter 829 is 180°, effect of -1 may be implemented. In the signal transmitting direction, the signal transmitted by the first splitting port 8271a of the third power divider 827 to the second splitting port 8222a of the second power divider 822 changes to -x2. In this case, the two radio frequency channels on the digital unit side input the signals x1 and x2 to the topology network unit 82 respectively, and y1 and y2 output by the topology network unit 82 satisfy: y1 = x1 - x2, y2 = x1 + x2, which may also be represented as:

$$\begin{pmatrix} y1 \\ y2 \end{pmatrix} = \begin{pmatrix} 1 & -1 \\ 1 & 1 \end{pmatrix} \begin{pmatrix} x1 \\ x2 \end{pmatrix}$$

The beamforming unit may feed y1 and y2 to the two array surfaces of the antenna after adjusting phases and amplitudes of y1 and y2. For example, for the antenna in FIG. 3 or FIG. 4, the beamforming unit may feed the adjusted y1 to one antenna element 112 on an upper array surface 11a, and feed the adjusted y2 to one antenna element 112 on a lower array surface 11b.

In the signal receiving direction, the signal transmitted by the second splitting port 8222a of the second power divider 822 to the first splitting port 8271a of the third power divider 827 changes to -y1. In this case, the beamforming unit adjusts phases and amplitudes of two signals from the two array surfaces of the antenna, and then outputs y1 and y2. Likewise, the antenna in FIG. 3 or FIG. 4 is used as an example. The two signals may be from one antenna element 112 on the upper array surface 11a and one antenna element 112 on the lower array surface 11b respectively. x1 and x2 output by the topology network unit 82 satisfy: x1 = y1 + y2, x2 = -y1 + y2, which may also be represented as:

$$\begin{pmatrix} x1 \\ x2 \end{pmatrix} = \begin{pmatrix} 1 & 1 \\ -1 & 1 \end{pmatrix} \begin{pmatrix} y1 \\ y2 \end{pmatrix}$$

It can be learned from the foregoing analysis that, in the operating mode in which the phase of the phase shifter 829 is 180°, signals (y1 and y2 in the signal transmitting direction, and x1 and x2 in the signal receiving direction) in the two radio frequency channels corresponding to the topology network unit 82 are interleaved and affect each other, and each radio frequency channel may obtain the apertures of the two array surfaces of the antenna.

Therefore, in this embodiment, the phase of the phase shifter 829 may be adjusted, so that the topology network unit 82 can flexibly switch between the foregoing two operating modes, thereby balancing advantages of the two operating modes, and further helping a communication device using the topology network unit be applicable to more scenarios.

Moreover, in this embodiment, for each topology network unit 82, when the communication device transmits signals, frequency bands of x1 and x2 may be set with reference to the foregoing embodiment. Similarly, when the communication device receives signals, frequency bands of y1 and y2 may also be set with reference to the foregoing embodiment. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication device, wherein the communication device comprises $2^n$ radio frequency channels, the communication device comprises a digital unit, a topology network unit, and a beamforming unit, the topology network unit is connected between the digital unit and the beamforming unit, and the topology network unit comprises a first power divider and a second power divider, wherein

   the first power divider and the second power divider each comprise $2^n$ splitting ports and one combining port, the splitting ports of the first power divider are respectively connected to the $2^n$ radio frequency channels on a digital unit side, the combining port of the first power divider is connected to the combining port of the second power divider, and the splitting ports of the second power divider are connected to the $2^n$ radio frequency channels on a beamforming unit side; and
   n is a natural number and $n \geq 1$.

2. The communication device according to claim 1, wherein in a signal transmitting direction, signals in the $2^n$ radio frequency channels on the digital unit side are in a same frequency band, and center frequencies of the signals in the $2^n$ radio frequency channels are different.

3. The communication device according to claim 1 or 2, wherein in a signal receiving direction, signals in the $2^n$ radio frequency channels on the beamforming unit side are in a same frequency band, and center frequencies of the signals in the $2^n$ radio frequency channels are different.

4. A communication device, wherein the communication device comprises $2^n$ radio frequency channels, the communication device comprises a digital unit, a topology network unit, and a beamforming unit, the topology network unit is connected between the digital unit and the beamforming unit, and the topology network unit comprises a first power divider, a second power divider, $2^n$ transmission lines, and $2^{n+1}$ switches;

   the first power divider and the second power divider each comprise $2^n$ splitting ports and one combining port, and the combining port of the first power divider is connected to the combining port of the second power divider;
   $2^n$ switches in the $2^{n+1}$ switches are disposed on the digital unit side and respectively correspond to the $2^n$ radio frequency channels, and the other $2^n$ switches in the $2^{n+1}$ switches are disposed on the beamforming unit side and respectively correspond to the $2^n$ radio frequency channels;
   on the digital unit side, each of the switches is configured to switchably connect a corresponding radio frequency channel between one splitting port of the first power divider and one end of one of the transmission lines; and
   on the beamforming unit side, each of the switches is configured to switchably connect the corresponding radio frequency channel between one splitting port of the second power divider and the other end of the one of the transmission lines.

5. The communication device according to claim 4, wherein in a signal transmitting direction, signals in the $2^n$ radio frequency channels on the digital unit side are in a same frequency band, and center frequencies of the signals in the $2^n$ radio frequency channels are different.

6. The communication device according to claim 4 or 5, wherein in a signal receiving direction, signals in the $2^n$ radio frequency channels on the beamforming unit side are in a same frequency band, and center frequencies of the signals in the $2^n$ radio frequency channels are different.

7. The communication device according to any one of claims 1 to 6, wherein the communication device further comprises an antenna, and the antenna comprises at least two array surfaces; and
when n = 1, the communication device comprises two radio frequency channels, and the two radio frequency channels on the beamforming unit side are respectively connected to two array surfaces of the antenna.

8. The communication device according to any one of claims 1 to 6, wherein the communication device further comprises an antenna, and the antenna comprises at least two array surfaces; and
when n ≥ 2, the $2^n$ radio frequency channels on the beamforming unit side are separately connected to $2^{n-1}$ array surfaces of the antenna.

9. A communication device, wherein the communication device comprises two radio frequency channels, the communication device comprises a digital unit, a topology network unit, and a beamforming unit, the topology network unit is connected between the digital unit and the beamforming unit, and the topology network unit comprises a first power divider, a second power divider, a third power divider, a fourth power divider, and a phase shifter;

a combining port of the first power divider and a combining port of the third power divider are respectively connected to the two radio frequency channels on the digital unit side, and a combining port of the second power divider and a combining port of the fourth power divider are respectively connected to the two radio frequency channels on the beamforming unit side;
a first splitting port of the first power divider is connected to a first splitting port of the second power divider, a second splitting port of the first power divider is connected to a first splitting port of the fourth power divider, a first splitting port of the third power divider is connected to a second splitting port of the second power divider, and a second splitting port of the third power divider is connected to a second splitting port of the fourth power divider; and
the phase shifter is connected between the first splitting port of the third power divider and the second splitting port of the second power divider, and a phase of the phase shifter is 0° or 180°.

10. The communication device according to claim 9, wherein in a signal transmitting direction, signals in the two radio frequency channels on the digital unit side are in a same frequency band, and center frequencies of the signals in the two radio frequency channels are different.

11. The communication device according to claim 9 or 10, wherein in a signal receiving direction, signals in the two radio frequency channels on the beamforming unit side are in a same frequency band, and center frequencies of the signals in the two radio frequency channels are different.

12. The communication device according to any one of claims 9 to 11, wherein the communication device further comprises an antenna, and the antenna comprises at least two array surfaces; and
the two radio frequency channels on the beamforming unit side are respectively connected to two array surfaces of the antenna.

13. The communication device according to any one of claims 1 to 12, wherein the communication device further comprises a frequency conversion unit, and the frequency conversion unit is connected between the digital unit and the topology network unit, or the frequency conversion unit is connected between the topology network unit and the beamforming unit.

14. The communication device according to any one of claims 1 to 13, wherein the topology network unit further comprises an amplifier, and the amplifier is disposed at the splitting port or the combining port of the first power divider, and/or the amplifier is disposed at the splitting port or the combining port of the second power divider.

15. The communication device according to any one of claims 1 to 14, wherein the topology network unit further comprises a filter, and the filter is disposed at the splitting port or the combining port of the first power divider, and/or the filter is disposed at the splitting port or the combining port of the second power divider.

16. The communication device according to any one of claims 1 to 15, wherein the topology network unit further comprises a coupler, and the coupler is disposed at the splitting port or the combining port of the first power divider, and/or the coupler is disposed at the splitting port or the combining port of the second power divider.

17. The communication device according to any one of claims 1 to 16, wherein the communication device further comprises a circuit board, and the topology network unit is disposed on the circuit board.

18. The communication device according to any one of claims 1 to 16, wherein the communication device further comprises a radio frequency chip, and the topology network unit is integrated into the radio frequency chip.

19. The communication device according to any one of claims 1 to 18, wherein the communication device further comprises a control unit, a clock unit, and a power supply unit;

the control unit is connected to the digital unit, the topology network unit, and the beamforming unit separately;
the clock unit is connected to the digital unit, the topology network unit, and the beamforming unit separately; and
the power supply unit is connected to the digital unit, the topology network unit, and the beamforming unit separately.

20. A base station, comprising a baseband processing unit and the communication device according to any one of claims 1 to 19, wherein the communication device is connected to the baseband processing unit.

Communication device

Terminal  Terminal  Terminal

FIG. 1

3
2
1
11
5
6
4

FIG. 2

FIG. 3

FIG. 4

8

FIG. 5

8

FIG. 6

8

FIG. 7

**82a(82)**

**821**

**822**

$x_1$

**8211** **8221**

$y_1$

$x_2$

**8212** **8222**

$y_2$

$x_3$

**8213** **8223**

$y_3$

$x_4$

**8214** **8224**

$y_4$

**82b(82)**

**821**

**822**

FIG. 8

26 GHz

x1 — 400 MHz

26 GHz

x2 — 400 MHz

⇨

26 GHz

y1 — 400 MHz

26 GHz

y2 — 400 MHz

FIG. 9

25.8 GHz

x1 — 400 MHz

26.2 GHz

x2 — 400 MHz

⇨ y1/y2

26 GHz

800 MHz

FIG. 10

FIG. 11

FIG. 12

FIG. 13

**FIG. 14**

**FIG. 15**

FIG. 16

FIG. 17

82

821                                                                                                      822

S1                                              826-1(826)                                                S5

$x_1$                        8211                                                    8221                        $y_1$

                                                826-2(826)

$x_2$                        8212                                                    8222                        $y_2$
S2                                                                                                                    S6

S3                8213                                                                        8223                S7
$x_3$                                                                                                                    $y_3$

                        8214                        826-3(826)                                8224                $y_4$
$x_4$
S4                                              826-4(826)                                                S8

FIG. 18

82

821                                                                                                      822

S1                                              826-1(826)                                                S5
$x_1$                        8211                                                    8221                        $y_1$

                                                826-2(826)
$x_2$                        8212                                                    8222                        $y_2$
S2                                                                                                                    S6

S3                8213                                                                        8223                S7
$x_3$                                                                                                                    $y_3$

                        8214                        826-3(826)                                8224
$x_4$                                                                                                                    $y_4$
S4                                              826-4(826)                                                S8

FIG. 19

**82**

$x_1$

821

8211a
8212a

8221a
8222a

822

$y_1$

829

828

827

8281a
8282a

8271a
8272a

$x_2$

$y_2$

FIG. 20

**82**

821

$x_1$

8211a
8212a

8221a
8222a

822

$y_1$

829

828

827

8281a
8282a

8271a
8272a

$y_2$

$x_2$

FIG. 21

FIG. 22

## INTERNATIONAL SEARCH REPORT

| International application No. |
| --- |
| **PCT/CN2022/124728** |

**A. CLASSIFICATION OF SUBJECT MATTER**

H04B7/04(2017.01)i

According to International Patent Classification (IPC) or to both national classification and IPC

**B. FIELDS SEARCHED**

Minimum documentation searched (classification system followed by classification symbols)

IPC: H04B, H04W, H01Q

Documentation searched other than minimum documentation to the extent that such documents are included in the fields searched

Electronic data base consulted during the international search (name of data base and, where practicable, search terms used)

CNTXT, ENTXTC, ENTXT, DWPI: 基站, 天线, 射频通道, 波束赋形, 第一功分器, 第二功分器, 分路端口, 合路端口; base station, antenna, radio frequency channel, beamforming, first power splitter, second power splitter, splitter port, combiner port

**C. DOCUMENTS CONSIDERED TO BE RELEVANT**

| Category* | Citation of document, with indication, where appropriate, of the relevant passages | Relevant to claim No. |
| --- | --- | --- |
| A | CN 114188727 A (MOBILE COMMUNICATION TECHNOLOGY CO. LTD.) 15 March 2022 (2022-03-15)<br>description, paragraphs 4-98 | 1-20 |
| A | CN 103700943 A (WUHAN HONGXIN TELECOMMUNICATION TECHNOLOGIES CO., LTD.) 02 April 2014 (2014-04-02)<br>entire document | 1-20 |
| A | CN 103840865 A (CHINA MOBILE COMMUNICATIONS CORP.) 04 June 2014 (2014-06-04)<br>entire document | 1-20 |
| A | CN 105612812 A (HUAWEI TECHNOLOGIES CO., LTD.) 25 May 2016 (2016-05-25)<br>entire document | 1-20 |
| A | WO 2021134383 A1 (HUAWEI TECHNOLOGIES CO., LTD.) 08 July 2021 (2021-07-08)<br>entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 June 2023** | **21 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/124728**

| Patent document cited in search report | | | Publication date (day/month/year) | Patent family member(s) | | | Publication date (day/month/year) |
|---|---|---|---|---|---|---|---|
| CN | 114188727 | A | 15 March 2022 | None | | | |
| CN | 103700943 | A | 02 April 2014 | None | | | |
| CN | 103840865 | A | 04 June 2014 | None | | | |
| CN | 105612812 | A | 25 May 2016 | EP | 3142457 | A1 | 15 March 2017 |
| | | | | WO | 2016004553 | A1 | 14 January 2016 |
| WO | 2021134383 | A1 | 08 July 2021 | EP | 4072012 | A1 | 12 October 2022 |
| | | | | CN | 114846744 | A | 02 August 2022 |

Form PCT/ISA/210 (patent family annex) (July 2022)